(19) Europäisches Patentamt / European Patent Office / Office européen des brevets

(11) **EP 1 664 674 B1**

(12) **EUROPÄISCHE PATENTSCHRIFT**

(45) Veröffentlichungstag und Bekanntmachung des Hinweises auf die Patenterteilung:
**17.04.2013 Patentblatt 2013/16**

(21) Anmeldenummer: 04765447.0

(22) Anmeldetag: **21.09.2004**

(51) Int Cl.:
***G01C 15/00*** *(2006.01)*

(86) Internationale Anmeldenummer:
**PCT/EP2004/010571**

(87) Internationale Veröffentlichungsnummer:
**WO 2005/031259 (07.04.2005 Gazette 2005/14)**

(54) **VERFAHREN UND SYSTEM ZUR BESTIMMUNG DER AKTUALPOSITION EINES HANDHALTBAREN MESSGERÄTES IM RAUM**

METHOD AND SYSTEM FOR THE DETERMINATION OF THE ACTUAL POSITION OF A HAND-HELD POSITIONING APPARATUS

MÉTHODE ET SYSTÈME POUR LA DÉTERMINATION DE LA POSITION ACTUELLE D'UN APPAREIL DE POSTIONEMENT PORTATIF

(84) Benannte Vertragsstaaten:
**AT BE BG CH CY CZ DE DK EE ES FI FR GB GR HU IE IT LI LU MC NL PL PT RO SE SI SK TR**

(30) Priorität: **22.09.2003 EP 03021134**

(43) Veröffentlichungstag der Anmeldung:
**07.06.2006 Patentblatt 2006/23**

(73) Patentinhaber: **Leica Geosystems AG**
**9435 Heerbrugg (CH)**

(72) Erfinder:
• **BRAUNECKER, Bernhard**
**CH-9445 Rebstein (CH)**
• **GÄCHTER, Bernhard**
**CH-9436 Balgach (CH)**
• **AEBISCHER, Beat**
**CH-9435 Heerbrugg (CH)**

(74) Vertreter: **Harmann, Bernd-Günther**
**Kaminski Harmann**
**Patentanwälte AG**
**Landstrasse 124**
**9490 Vaduz (LI)**

(56) Entgegenhaltungen:
| | |
|---|---|
| EP-A- 0 341 890 | EP-A- 0 468 677 |
| WO-A-82/01420 | US-A- 5 011 288 |
| US-A- 5 260 770 | US-A- 5 467 273 |
| US-A- 5 757 499 | US-A1- 2002 049 530 |
| US-A1- 2003 169 414 | US-B1- 6 400 447 |

**Beschreibung**

Die Erfindung betrifft ein Verfahren zur Bestimmung der Lage eines handhaltbaren Messgerätes im Raum nach Anspruch 1, eine Verwendung des Verfahrens zur Korrektur von Abweichungen einer auf Inertialsensoren basierenden Positionierungs- und Orientierungsmessvorrichtung nach Anspruch 14, ein handhaltbares Messgerät nach dem Oberbegriff des Anspruchs 15, ein lokales Lagebestimmungssystem nach Anspruch 27 sowie eine Verwendung des Verfahrens nach Anspruch 29.

In vielen geodätischen Anwendungen werden Verfahren und Systeme zur Positions- und/oder Orientierungsbestimmung eines geodätischen Instrumentes verwendet. Von einer mit einem solchen System bestimmten Position aus werden dann meist weitere Messungen durchgeführt, die mit der Position verknüpft sind und zumeist auch die Kenntnis der Orientierung des Messgerätes im Raum benötigen. Für solche Anwendungen sind zur eindeutigen Festlegung der absoluten Lage im Raum die 6 Freiheitsgrade des handhaltbaren Messgerätes zu bestimmen. Die Problemstellung beinhaltet somit die Bestimmung von Position und Orientierung als zwei grundsätzlich getrennt lösbare Aufgaben, die aber für viele Anwendungen verknüpft durchgeführt werden müssen. Im Regelfall werden somit sowohl Position als auch Orientierung eines handhaltbaren Messgerätes benötigt.

Ein Beispiel für Positionsbestimmungssysteme sind globale Positionierungssysteme wie z.B. GPS, GLONASS oder das im Aufbau befindliche europäische Galileo-System. Diese Systeme basieren auf dem möglichst ungestörten Empfang von Satellitensignalen, die allerdings auch durch Hindernisse abgeschattet und somit in ihrer Nutzbarkeit eingeschränkt werden können. Im unmittelbaren Nahbereich von Hindernissen kann aufgrund deren abschattender Wirkung der Empfang der Signale eingeschränkt oder vollständig unmöglich sein, so dass eine Positionsbestimmung mit diesem System nicht mehr möglich ist. Diese Einschränkungen betreffen insbesondere Messungen in Innenräumen von Gebäuden, in denen der Empfang einer zur Positionierung benötigten Anzahl von Satelliten im Regelfall auszuschliessen ist. Eine weitere Problematik besteht darin, dass globale Positionierungssysteme nicht immer die benötigte Genauigkeit der Positionsbestimmung bereitstellen bzw. einen erhöhten Aufwand erfordern, z.B. durch Nutzung einer Referenzstation oder längere Messzeiten.

Die Bestimmung der Orientierung eines Messgerätes mit solchen Systemen ist beispielsweise durch die Nutzung von zwei Empfangsantennen möglich. Ist die Lage der Basislinie bzw. der Antennen bezüglich der Geräteachse bekannt, kann auf die Orientierung des Messgerätes geschlossen werden. Um die damit noch unbestimmte Drehung um die Geräteachse zu bestimmen, kann ein Neigungssensor verwendet werden.

Ein weiteres Beispiel stellt die Positionsbestimmung eines reflektortragenden Instrumentes mit einem Theodoliten bzw. Tachymeter dar. Durch eine Richtungs- und Entfernungsmessung mit dem Tachymeter zu dem geodätischen Instrument kann bei bekannter Position des Tachymeters auch die Position des Instruments bestimmt werden. In Verbindung mit einer automatisierten Zielerkennung und Zielverfolgung kann eine quasi-kontinuierliche Positionsbestimmung erreicht werden. Voraussetzung für die Messung ist hier die Sichtverbindung zwischen den beiden Komponenten. Erfolgt eine Unterbrechung dieser Verbindung, z.B. durch Bewuchs oder Gebäude im Sichtbereich, versagt die Art der Positionsbestimmung. Auch kann von einem motorisierten Tachymeter zeitgleich stets nur ein Instrument verfolgt werden, so dass z.B. bei vielen Fahrzeugen auf einer Baustelle auch eine grosse Anzahl von Theodoliten verwendet werden muss. Die Verwendung einer grossen Zahl von Theodoliten, die praktisch den gesamten zu vermessenden Bereich ohne Lücken im sichtbaren Bereich abdecken, verbietet sich meist aufgrund des Aufwandes an Gerät und Personal. Ausserdem bedingt eine solche Lösung eine hohe Komplexität sowie eine ständige Kommunikation zur Steuerung des Messvorganges.

Um die Aktualposition als gegenwärtigen Standort des Instruments unter allen Bedingungen mit der benötigten Genauigkeit zu ermöglichen, sind Verfahren bekannt, die auf einer Bestimmung der eigenen Position gegenüber hinsichtlich ihrer Position bekannten Objekten als Referenzobjekten bzw. Referenzpunkten beruhen. Ein Beispiel hierfür stellt das klassische Verfahren des Rückwärtsschnittes dar. Sollen nun Aktualpositionen für ein geodätisches Instrument bzw. ein dafür geeignetes Positionierungsgerät aus der Kenntnis von Referenzpunkten abgeleitet werden, so müssen die Referenzpunkte vorher festgelegt und mit hinreichender Genauigkeit vermessen werden.

Die Bestimmung der Aktualposition erfolgt nachfolgend durch eine Messung zu den Referenzpunkten, aus der Rückschlüsse über den eigenen Standort bzw. die Aktualposition abgeleitet werden können. In vielen Fällen verfügt ein geodätisches Instrument nur über eine Fähigkeit zur Entfernungsmessung bzw. ist eine Messung von Winkeln nicht mit der benötigten Präzision oder Geschwindigkeit durchzuführen. In diesen Fällen muss die Positionsbestimmung allein durch Entfernungsmessungen durchgeführt werden. Hierzu werden die Entfernungen zu mehreren Punkten mit bekannter Position gemessen und mit bekannten Verfahren, wie sie beispielsweise auch in der Photogrammetrie verwendet werden, kann die Bestimmung der Aktualposition erfolgen. Ein Beispiel hierfür stellen Korrelationsverfahren bzw. Korrelationsrechnungen dar. Dabei ist die Zahl der benötigen Punkte abhängig von deren Lage und der beabsichtigten Genauigkeit der Messung. Im Regelfall werden aber, abgesehen von besonders günstigen Konstellationen, mindestens 3 oder 4 Punkte benötigt. Wird zusätzlich ein Winkel berücksichtigt, z.B. indem zusätzlich der Winkel gegenüber der Horizontalen erfasst wird, kann die Zahl der Punkte auf zwei reduziert werden.

Die jeweils tatsächlich benötigte Zahl an Punkten ist abhängig von der Lage der bekannten Punkte und ggf. möglicher Einschränkungen zur Reduzierung einer Mehrdeutigkeit. Bei drei Entfernungsmessungen zu den verschiedenen Referenzpunkten wird durch die drei bekannten Positionen eine Ebene definiert, an der die zu bestimmende Aktualposition gespiegelt werden kann. Als Lösung ergeben sich zwei mögliche Positionen, von denen aber meist eine Position aus Plausibilitätsgründen, z.B. weil sie unter der Erdoberfläche liegen würde, oder aufgrund einfacher weiterer Informationen ausgeschlossen werden, wie z.B. der Unterscheidung zwischen Nord und Süd, die auch durch einen einfachen Magnetkompass getroffen werden kann. Eine eindeutige Bestimmung mit drei bekannten Punkten ist möglich, wenn günstige geometrische Verhältnisse vorliegen. Dies ist beispielsweise der Fall, wenn die gesuchte Position auf einer Verbindungsgeraden zwischen zwei bekannten Punkten liegt.

Auch mit geodätischen Geräten kann neben der Position prinzipiell die Orientierung einer Struktur im Raum bestimmt werden, indem Messungen von zwei oder drei Punkten der Struktur durchgeführt werden, wobei durch Messung von nur zwei Punkten jedoch nur 5 Freiheitsgrade bestimmt werden können. Aufgrund der räumlichen Abmessungen handhaltbarer Geräte verbietet sich jedoch ein solcher Ansatz in der Praxis.

Zudem ist trotz dieser grundsätzlich bekannten Möglichkeit der Bestimmung einer Aktualposition die Durchführung mit geodätischen Instrumenten des Stands der Technik prohibitiv komplex und erfordert aufgrund der notwendigen Messungen stets eine Unterbrechung der ansonsten ablaufenden Tätigkeit. Insbesondere ist es nicht möglich, aus einer fortlaufenden Bewegung heraus ständig Messungen durchzuführen oder gar die Bestimmung der Aktualposition nach diesem Prinzip zur Korrektur von Fehlern andersgearteter Positionierungssysteme zu verwenden.

Aus der US 5,467,273 ist ein Robotersystem für Bewegungen in einer ausgedehnten Ebene bekannt, das die eigene Position und Orientierung durch Referenzierung bezüglich bekannter, reflektierender Punkte bestimmt. Hierfür nutzt das Robotersystem ein um eine vertikale Achse bewegbares Scannersystem mit Entfernungsmesser, das Entfernung und Winkel zu den Referenzpunkten misst und daraus die aktuelle Position bestimmt.

Aufgrund der Einschränkung der Bewegung in einer Ebene ist hier die Orts- und Richtungsbestimmung jedoch wenig komplex und nicht ohne weiteres auf eine dreidimensionale Problemstellung übertragbar. Zudem sind die für die Steuerung eines Robotersystems dieses Typs benötigten Genauigkeiten signifikant geringer als die von geodätischen Applikationen.

Von besonderer Relevanz ist hierbei die Zahl der für eine Messung mit vorgegebener Genauigkeit benötigten Referenzpunkte. Diese soll, insbesondere bei einer anfänglichen Anbringung und Vermessung von solchen Punkten, möglichst gering sein. Um die Zahl von benötigten Referenzpunkten gering zu halten ist daher eine sorgfältige Auswahl der Anbringungsgeometrie und der zu messenden Grössen notwendig.

Eine Aufgabe der vorliegenden Erfindung besteht darin, ein Verfahren und eine Vorrichtung bzw. ein System bereitzustellen, das eine Bestimmung der Aktualposition sowie der Orientierung eines handhaltbaren Messgerätes selbst in stark durchschnittenem Gelände oder in Innenräumen ermöglicht.

Eine weitere Aufgabe ist die Verkürzung der zwischen den notwendigen Messungen liegenden Zeiträume.

Eine weitere Aufgabe ist die Bereitstellung eines lokalen Positionierungs- und Orientierungssystems, bei dem die zur Bestimmung der Lage im Raum notwendige Elektronik stets mit der in ihrer Lage zu bestimmenden Einheit mitgeführt werden kann und das somit in seiner Auslegung eine weitgehende Unabhängigkeit von der Zahl der Benutzer besitzt.

Die Erhöhung der Bestimmungsgenauigkeit von Aktualposition und Aktualorientierung ist eine weitere Aufgabe der vorliegenden Erfindung.

Eine weitere Aufgabe ist die Vereinfachung und Verkürzung der Messungen zur Bestimmung von Aktualposition und Aktualorientierung.

Eine weitere Aufgabe der Erfindung besteht darin, eine automatische Identifizierung und Vermessung der Referenzpunkte zu ermöglichen.

Eine weitere Aufgabe der Erfindung besteht darin, eine automatische Bestimmung und Überprüfung von Bearbeitungspunkten zwischen definierten Start- und Endpunkten zu ermöglichen.

Eine weitere Aufgabe der vorliegenden Erfindung besteht darin, ein Verfahren, ein handhaltbares Messgerät bzw. ein Positionierungs- und Orientierungssystem bereitzustellen, das eine fortlaufende, vorzugsweise im Hintergrund ablaufende Korrektur der Messungen von Positionierungs- und Orientierungssystemen anderer Funktionsprinzipien erlaubt.

Diese Aufgaben werden erfindungsgemäss durch Merkmale der Ansprüche 1, 14, 15, 27 bzw. 29 oder durch Merkmale der Unteransprüche gelöst.

Die Erfindung betrifft ein Verfahren und ein Positionierungsgerät bzw. -system zur Bestimmung der Aktualposition, insbesondere in Zusammenhang mit der Verwendung eines geodätischen Instrumentes.

Hierfür wird in einem ersten Verfahrensschritt eine Zahl von Referenzpunkten festgelegt, detektierbar gestaltet und vermessen. Diese Menge von Referenzpunkten wird so gewählt, dass nach Möglichkeit von jedem Punkt des zu nutzenden Bereichs aus wenigsten zwei der Referenzpunkte erfasst werden können. Eine Vermessung der Positionen dieser Referenzpunkte kann mit allgemein bekannten Verfahren der Vermessungstechnik erfolgen, so z.B. mittels einem Total Positioning System, einem globalen Positionierungssystem oder auch durch Luftbildphotogrammetrie. Befinden sich die Referenzpunkte in geschlossenen Räumen können diese beispielsweise auch mit handgehaltene Distanzmessern vermessen werden, wobei entweder von mehreren bekannten Positionen die Entfernung zu demselben Referenzpunkt aufgenommen wird oder aber weitere Informationen, wie z.B. aus Winkelmessungen genutzt werden können. Grundsätzlich kann auch ein bereits eingemessener trigonometrischer Punkt als Referenzpunkt gewählt werden. Die Referenzpunkte können aber auch mit dem erfindungsgemässen Positionierungsgerät relativ zu einem vorgegebenen Ausgangspunkt, auf dem das Positionierungsgerät anfänglich placiert wird, vermessen werden.

Um die Referenzpunkte detektierbar zu gestalten, werden diese durch Anbringen von speziell gestalteten Elementen definiert. Hierzu können kooperative Ziele wie z.B. Tripelprismen, reflektierende Folien oder andere in der Vermessungstechnik übliche Reflektoren verwendet werden. Eine Kombination von genauer Festlegung des Referenzpunkt mit einer guten Erkennbarkeit aus verschiedenen Richtungen bietet die Verwendung von sphärischen Elementen. Diese können beispielsweise als reflektierende Kugeln oder aber auch als Halb- oder Viertelkugeln ausgebildet sein. Durch die Form und das Reflexionsvermögen der Oberfläche wird einfallende Laserstrahlung für alle Einfallsrichtungen gleichermassen zurückreflektiert. Aufgrund des fixen Radius kann die Entfernung zum definierten Punkt genau berechnet werden. Ausserdem kann aufgrund des Schwerpunktes der Reflexion auf der Oberfläche der Kugel bzw. des Kugelsegments die Lage des Referenzpunkts auch für Winkelmessungen mit hinreichender Genauigkeit bestimmt werden.

Insbesondere im Zusammenhang mit einer längerfristigen Nutzung eines Areals, z.B. einer Grossbaustelle, bietet es sich an, durch Anlage einer Vielzahl von Referenzpunkten ein aus den meisten Teilbereichen einsehbares Netz von bekannten Positionen zu definieren, das die Basis dieses lokalen Positionierungssystems darstellt und aufgrund der Vorteile einer längeren Nutzungsdauer auch mit höherem Aufwand eingemessen werden kann.

Das erfindungsgemässe Positionierungsgerät verfügt über wenigstens eine Strahlungsquelle zur Emission von Laserstrahlung. Diese Laserstrahlung wird nach ihrer Aussendung und nachfolgenden Reflexion an einer Oberfläche wieder erfasst und in einem Empfänger ausgewertet, wobei eine Entfernungsmessung nach dem Phasenmessprinzip oder dem Prinzip der Pulslaufzeitmessung durchgeführt wird. Eine solche Vorrichtung ist beispielsweise aus der EP 0 738 899 B1 bekannt. Ein weiteres erfindungsgemäss verwendbares Prinzip zur Entfernungsmessung wird in der WO 2004/074773 beschrieben.

Der Laserstrahl wird in einer Abtastbewegung über wenigstens ein Raumsegment geführt, wobei Raumsegment, Zahl der Referenzpunkte und Ausrichtung des erfassten Raumsegments so aufeinander abgestimmt sein müssen, dass behufs einer Entfernungsmessung mindestens zwei der Referenzpunkte in einem Raumsegment oder jeweils ein Referenzpunkt in einem von zwei Raumsegmenten gelegen sind. Je nach konkret gewählter Realisierung einer Ausführungsform können verschiedene Abtastbewegungen für das Raumsegment gewählt werden. So bietet sich z.B. bei der Nutzung gegeneinander rotierbarer Prismen als steuerndes Element eines Scanners eine rosettenförmige Abtastung eines kreisrunden abgetasteten bzw. erfassten Raumsegments an.

Die Referenzpunkte können grundsätzlich erfasst werden, indem das Raumsegment einen Bereich überstreicht und in das Raumsegment eintretende bzw. darin gelegene Referenzpunkte erfasst, identifiziert und vermisst. Daneben können unter Verwendung von Komponenten zur unabhängigen Abtastung von mehreren Raumsegmenten auch stets ein bzw. mehrere Referenzpunkte verfolgt werden. Dies bedeutet, dass das Raumsegment stets auf den Referenzpunkt ausgerichtet wird, so dass eine ständige Identifizierung von Referenzpunkten entfallen bzw. auf eine Verifikation beschränkt werden kann.

Die Referenzpunkte können anhand ihres Reflexionsvermögens vom Hintergrund unterschieden werden, so dass deren Position bereits aus der Schwankung in der Intensität der reflektierten Strahlung bestimmt werden kann. Aus der Verknüpfung von Emissionsrichtung und Intensitätsmaximum können sowohl Entfernung als auch die Richtung zum Referenzpunkt als Lageinformation abgeleitet werden.

Vorteilhafterweise können jedoch auch Verfahren der Bildaufnahme und Bildverarbeitung verwendet werden. Mit den Entfernungen verknüpft werden in diesem Fall zusätzlich Bilder durch das Positionierungsgerät aufgenommen. Diese können aus vollständigen Bildern eines erfassten Sichtbereichs oder aber beispielsweise aus Teilbildern oder Ausschnitten bestehen, in denen die Referenzpunkte lokalisiert und aus der Lage im Bild die Lageinformationen abgeleitet werden. Zur Aufnahme von Bildern steht mit CCD- und CMOS-Kameras eine Vielzahl von geeigneten Sensoren zur Verfügung, die auch mit geeigneten optischen Komponenten ergänzt werden können und in Form eines Weitwinkelendoskops auch in miniaturisierter Form in Geräten integrierbar sind. Die gemessenen Entfernungen werden den Lageinformationen zugeordnet, die z.B. aus Winkeln bestehen, die anhand der Zahl der zwischen zwei identifizierten Referenzpunkten gelegenen Bildpunkte abgeleitet werden können.

Aus den Entfernungen oder den mit den jeweiligen Winkeln verknüpften Entfernungen kann nun die tatsächliche räumliche Aktualposition sowie bei Kenntnis der Emissionsachse der Strahlung gegenüber einer Referenzachse des Messgerätes auch die Orientierung erhalten werden. Zur Ableitung dieser Information können allgemein bekannte Verfahren der Photogrammetrie und der Bildverarbeitung verwendet werden. Die Verknüpfung von Bild- und Entfernungsinformation bietet gegenüber der sequentiellen Vermessung einzelner Punkte eine Vielzahl von Vorteilen. Aufgrund der zeitgleichen oder zeitnahen Erfassung und bildlichen Anordnung der Messungen werden Zuordnungsprobleme vermieden. Darüber hinaus bietet bereits die Erfassung der räumlichen Anordnung bzw. Abfolge der Messungen eine Zusatzinformation, die zur nachfolgenden Bestimmung der Aktualposition oder Aktualorientierung herangezogen werden kann.

Im Vergleich zu bekannten Verfahren, die eine Lage in der Ebene bestimmen, ergeben sich bei dreidimensionalen Problemstellungen mathematisch komplexere Beschreibungen.

In zwei Dimensionen wird eine Drehlage durch einen einzigen Winkel beschrieben, die entsprechende Drehgruppe SO(2) ist kommutativ und isomorph zum Einheitskreis $S^1$ (mit komplexer Multiplikation als Gruppenoperation).

In drei Dimensionen hingegen wird eine Drehlage durch einen Punkt in der 3-dimensionalen Liegruppe SO(3) beschrieben, welche nicht-kommutativ ist und als 3-dimensionale Mannigfaltigkeit eine wesentlich kompliziertere Topologie aufweist, insbesondere nicht homöomorph zur 3-dimensionale Einheitssphäre $S^3$ ist.

Die Identifizierung der Referenzpunkte und damit die Verknüpfung der vom Positionierungsgerät aufgenommenen von Lageinformation mit der Position eines speziellen Referenzpunktes kann auf verschiedene Weise erfolgen. Zum einen können die einen Referenzpunkt definierenden Elemente unterscheidbar ausgestaltet werden, so dass ein erfasster Referenzpunkt ohne weitere Bezugnahmen zu anderen Referenzpunkten eindeutig identifiziert werden kann. Hierfür besteht die Möglichkeit des Aufbringens eines Codes, der z.B. wie ein Barcode in dem aufgenommenen Bild erkennbar und auswertbar ist, oder auch die spezielle Gestaltung der physikalischen Eigenschaften eines Elementes. Ein Beispiel für eine solche Gestaltung der physikalischen Eigenschaften stellt das Aufprägen einer diffraktiven Struktur auf eine reflektierende Kugel dar. Dieses kann aber beispielsweise auch in seinem spektralen Reflexionsvermögen eindeutig ausgelegt werden. Wird ein solchermassen gestaltetes Element von einem Laserstrahl mit zwei Wellenlängen erfasst, so kann anhand des typischen Intensitätsverhältnisses der Reflexion eine Identifikation des Elements erfolgen.

Darüber hinaus bieten aber gerade Verfahren der Bildverarbeitung die Möglichkeit, Elemente auch ohne deren individuelle Gestaltung zu verwenden, indem auch die Anordnung der Elemente zueinander berücksichtigt wird. Da die räumliche Position aller Referenzpunkte bekannt ist, kann die aus einem erfassten Bild abgeleitete Lage der Referenzpunkte zueinander verwendet werden, um eine Identifizierung der einzelnen Punkte zu ermöglichen. Hierzu ist es vorteilhaft, wenn aus nur wenigen Referenzpunkten und deren Lage zueinander zweifelsfrei eine Zuordnung zu Positionen erfolgen kann. Zur Gewährleistung einer guten Identifizierbarkeit auch bei nur kleinen erfassten Teilmengen können die Referenzpunkte stochastisch verteilt oder in Form spezieller Anordnungen, wie z.B. einer mathematischen M-Sequenz, plaziert werden.

Werden im Messgerät weitere Komponenten zur Ortsbestimmung verwendet, wie z.B. Inertialsensoren, die eine Veränderung bezüglich einer bekannten Startposition registrieren, so kann auch diese Information, ggf. zusammen mit einer Richtungs- oder Neigungsmessung, zur Identifikation der im Raumsegment erfassten Referenzpunkte genutzt werden.

Wird nur eine geringe Anzahl von Referenzpunkten verwendet oder ist deren Festlegung bzw. Anbringung nur in einem eingeschränkten Bereich möglich oder sinnvoll, kann ein Grobsuchlauf zur automatischen Erfassung von Referenzpunkten verwendet werden, der dem Benutzer eine Ausrichtung des Messgerätes vorschlägt oder aber eine zur Erfassung des Raumsegments geeignete Komponente des Messgerätes ausrichtet, so dass keine Interaktion mit dem Benutzer erforderlich ist.

Um neben der Orts- bzw. Positionsbestimmung des Messgerätes eine Ausrichtungs- bzw. Orientierungsbestimmung durchführen zu können, muss eine Verknüpfung zwischen der Messung zu den Referenzpunkten und ausgezeichneten Geräteachsen erfolgen. Insofern werden neben den gemessenen Distanzen auch Richtungen zu den Referenzpunkten als vektorielle Grössen benötigt. Diese können beispielsweise aus den für die Positionsbestimmung genutzten Neigungsmessungen abgeleitet werden.

Alternativ oder ergänzend kann jedoch auch die Stellung der Komponenten eines Scannersystems gemessen werden, so dass bei der Erfassung und Vermessung eines Referenzpunktes auch die Richtung des Messstrahls relativ zur Geräteachse bekannt ist. Die hierfür notwendigen Grössen können auf einen einzigen Parameter reduziert werden. Ist beispielsweise die Abtastbewegung bekannt, so kann diese zeitlich parametrisiert werden, so dass aus dem Zeitpunkt einer Messung auf die dann aktuelle Emissions- bzw. Empfangsrichtung geschlossen werden kann. Die Bestimmung der Lage im Raum als Positions- und Orientierungsmessung bedarf somit grundsätzlich nur der Messung einer weiteren, zudem geräteinternen Grösse.

Ein erfindungsgemässes Messgerät wird zumeist weitere Messfunktionalitäten aufweisen, die eine Verwendung als geodätisches Instrument erlauben oder aber in ein solches Gerät integriert sind. Beispielsweise kann ein solches handhaltbares Messgerät zur Vermessung im Baubereich verwendbar gestaltet werden, indem ein weiterer Laserentfernungsmesser integriert oder aber die ohnehin bereits erfindungsgemäss vorhandene Entfernungsmessfunktionalität für weitere Messungen bereitgestellt wird. Mit einer solchen Ausführungsform können Distanzen in Gebäuden vermessen werden, ohne dass bei jeder Messung eine separate Positionsbestimmung und Positionsspeicherung erfolgen muss. Die gemessenen richtungsbehafteten Distanzen werden automatisch der bei der Messung eingenommenen Position als vektorielle Grössen zugeordnet und gespeichert bzw. übertragen. Darüber hinaus können parallel auch noch weitere Messungen durchgeführt werden.

Eine solche Ausführungsform kann auch verwendet werden, um die anfängliche Festlegung und Vermessung der Referenzpunkte durchzuführen. Hierfür werden an zumindest von Teilbereichen des zu nutzenden bzw. vermessenden Bereichs aus einsehbaren Stellen Referenzpunkte festgelegt und durch geeignete Elemente detektierbar gestaltet. Nachfolgend werden die Positionen der Referenzpunkte von einer bekannten Initialposition aus durch Aufnahme von Winkel und Entfernung vermessen. Steht keine Winkelmessfunktionalität zur Verfügung, kann statt dessen auch eine reine Entfernungsmessung von mehreren bekannten Initialpositionen zur Ableitung der Positionen der Referenzpunkte verwendet werden.

Eine weitere erfindungsgemässe Nutzung besteht in der Kombination mit einem Positionierungs- und/oder Orientierungsmesssystem anderer Funktionsweise. Dieses weitere System kann nun unterstützende Funktion besitzen oder aber selbst unterstützt werden. So weisen Inertialsensoren, die beispielsweise Drehraten und lineare Beschleunigungen messen, häufig Driften auf, die zur Abweichung der gemessenen Aktualposition von der wahren Position führen. Ein erfindungsgemässes Positionierungssystem bietet eine geeignete Korrekturfunktionalität, die Abweichungen in gewissen Zeitabständen durch erfindungsgemässe Bestimmungen der Aktualposition wieder korrigiert. Auf der anderen Seite können die zwischen den erfindungsgemäss durchgeführten Schritten liegenden Zeiträume durch eine Positionsbestimmung mittels Inertialsensoren gestützt werden. Auch kann durch ein weiteres Positionierungssystem der zeitweilige Verlust der Erfassung von Referenzpunkten überbrückt werden, so dass entweder die Zahl der Referenzpunkte verringert und/oder der Messungen zugängliche Bereich kurzzeitig ausgedehnt werden können. Ein solches hybrid angelegtes Positionierungsgerät kann damit auch den kurzzeitigen Verlust einer Sichtverbindung zu Referenzpunkten kompensieren, so dass der Einsatzbereich allgemein vergrössert und das Gerät hinsichtlich seiner Nutzung robuster ausgelegt ist. Die gleichen Überlegungen gelten analog für Orientierungsmesssysteme.

Aufgrund der Abmessungen von geodätischen Instrumenten wie auch deren Bauteile und der geringen Strahlquerschnitte ist die hochgenaue und stabile Positionierung ein kritisches Erfordernis. Vorteilhafterweise können daher alle Komponenten der Strahlungsquelle, Strahlführung und der steuernden und auswertenden Komponenten auf einer gemeinsamen Grundplatte angebracht oder auf einem gemeinsamen Substrat realisiert werden. Ein hinsichtlich Montageanforderungen und der notwendigen Montagegenauigkeit besonders geeignetes optisches Bauelement bzw. Bauteil als Komponenten sowie ein Gesamtsystem werden in der DE 195 33 426 A1 und EP 1 127 287 B1 beschrieben. In der WO 99/26754 sowie in der zum Anmeldezeitpunkt noch nicht veröffentlichten europäischen Patentanmeldung Nr. 02026648 werden geeignete Verfahren zur Lötbefestigung miniaturisierter Bauteile auf einer Grundplatte dargestellt. Ein geeignetes Verfahren zum Fixieren eines miniaturisierten Bauteils auf einer Trägerplatte, insbesondere zur Feinadjustierung von optischen Komponenten, ist beispielsweise in der zum Anmeldezeitpunkt noch nicht veröffentlichten europäischen Patentanmeldung Nr. 02026650 beschrieben.

Unter dem Begriff "Positionierungsgerät", "Orientierungsmessgerät" bzw. " handhaltbares Messgerät" soll in diesem Zusammenhang verallgemeinernd stets ein Messinstrument oder ein Instrument verstanden werden, das in Zusammenhang mit geodätischen Messungen oder der Maschinenführung verwendet wird, wie z.B. ein Lotstock oder eine Orts- bzw. Richtungsbestimmung einer Baumaschine. Generell betrifft die Erfindung Verfahren und Vorrichtungen zur Positions- und/oder Orientierungsbestimmung für eine Messung oder Überprüfung von Daten mit räumlichem Bezug. Insbesondere sollen hier unter einem geodätischen Instrument handgehaltene Distanzmesser, sowie Theodoliten und auch sogenannte Totalstationen als Tachymeter mit elektronischer Winkelmessung und elektrooptischem Entfernungsmesser verstanden werden. Gleichermassen ist die Erfindung zur Verwendung in spezialisierten Vorrichtungen mit ähnlicher Funktionalität geeignet, z.B. in militärischen Richtkreisen oder in der industriellen Bauwerks- oder Prozessüberwachung bzw. Maschinenpositionierung oder -führung.

Das erfindungsgemässe Verfahren und ein erfindungsgemässes handhaltbares Messgerät bzw. ein erfindungsgemässes lokales Positionierungs- und Orientierungssystem werden nachfolgend anhand von in der Zeichnung schematisch dargestellten Ausführungsbeispielen rein beispielhaft näher beschrieben. Im einzelnen zeigen

Fig.1     die Darstellung einer möglichen Ausführungsform des ersten Schrittes des erfindungsgemässen Verfahrens zur Positionierung einer Baumaschine;

Fig.2     die Darstellung einer möglichen Ausführungsform des zweiten und dritten Schrittes des erfindungsgemässen Verfahrens zur Positionierung einer Baumaschine;

Fig.3     die Ausgangssituation zur Nutzung des erfindungsgemässen Verfahrens in einem Innenraum eines Gebäudes;

Fig.4     die Darstellung einer möglichen Ausführungsform des zweiten und dritten Schrittes des erfindungsgemässen Verfahrens zur Lagebestimmung in einem Innenraum eines Gebäudes mit der Erfassung nur eines Raumsegments;

Fig.5     die Darstellung eines Beispiel der Abtastbewegung beim automatischen Detektieren und Ableiten von Lageinformationen für einen ersten und einen zweiten Referenzpunkt;

Fig.6a-b    die Darstellung von geeigneten Abtastbewegungen für ein erfindungsgemässes Verfahren;

Fig.7a-b    die Darstellung einer weiteren möglichen Ausführungsform des zweiten und dritten Schrittes des erfindungsgemässen Verfahrens zur Lagebestimmung in einem Innenraum eines Gebäudes mit einer voneinander unabhängigen Erfassung von zwei Raumsegmenten;

Fig.8    die Darstellung der mathematischen Bedingungen zum Ableiten der Aktualposition und Aktualorientierung des bewegbaren Messgeräts aus den Lageinformationen und den Positionen des ersten und zweiten Referenzpunkts;

Fig.9    die Darstellung der Verwendung eines erfindungsgemässen Verfahrens in Kombination mit einer weiteren Positionierungs- oder Orientierungsmessvorrichtung;

Fig.10a-b    die Darstellung einer ersten und zweiten möglichen Ausführungsform eines erfindungsgemässen Messgeräts;

Fig.11    die Darstellung von Komponenten der ersten Ausführungsform eines erfindungsgemässen Messgeräts;

Fig.12    die Darstellung der erfindungsgemässen Verwendung eines erfindungsgemässen Verfahrens mit einer dritten Ausführungsform eines erfindungsgemässen Messgeräts zur Festlegung von Bearbeitungspositionen, und

Fig.13    die Darstellung von grundlegenden mathematischen Beziehungen zum Ableiten der Lage des bewegbaren Messgeräts im Raum.

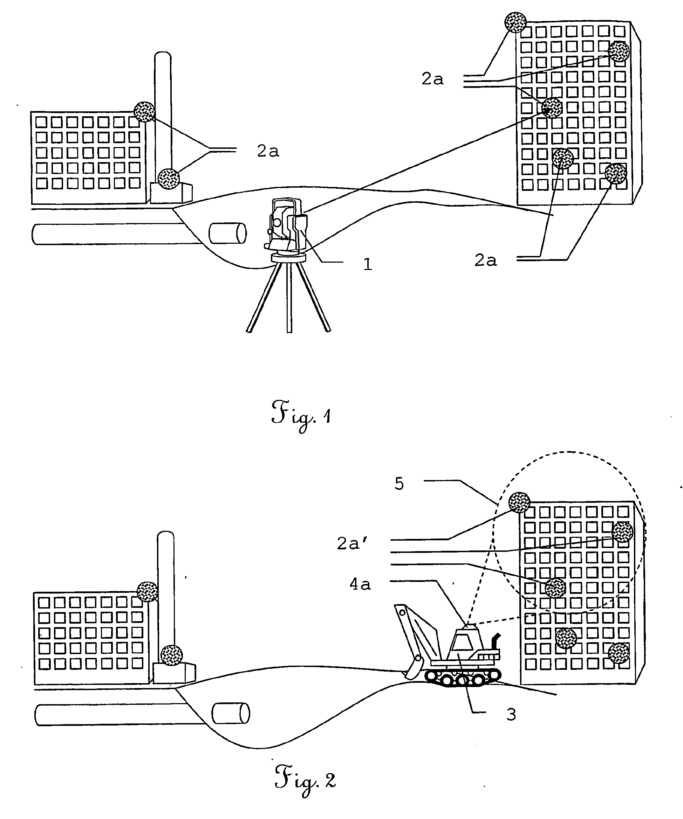

In Fig.1 wird exemplarisch der erste Schritt eines erfindungsgemässen Verfahrens zur Positionierung einer Baumaschine dargestellt. Durch eine Totalstation 1 als geodätisches Vermessungsinstrument werden auf einer Baustelle an benachbarten Gebäuden angebrachte Referenzpunkte 2a vermessen und in ihrer räumlichen Position bestimmt. Diese Festlegung der Referenzpunkte 2a an erhöhten Positionen erlaubt eine gute Einseh- und Erfassbarkeit von weiten Teilen der Baustelle aus. Dabei ist der Standort der Totalstation 1 als Initialposition des Verfahrens bekannt. Grundsätzlich kann die Positionsbestimmung der Referenzpunkte 2a aber auch mit anderen Vorrichtungen oder Verfahren erfolgen. Insbesondere kann erfindungsgemäss die Positionsbestimmung der Referenzpunkte auch mit einem erfindungsgemässen Positionierungsgerät erfolgen, dass sich auf einer bekannten Initialposition befindet. Soweit Punkte existieren, deren Position ohnehin bekannt ist, können diese auch als Referenzpunkte detektierbar ausgestaltet und im erfindungsgemässen Verfahren genutzt werden.

Fig.2 zeigt beispielhaft und rein schematisch den zweiten und dritten Schritt eines erfindungsgemässen Verfahrens zur Positionierung der Baumaschine 3. Auf der Baumaschine 3 ist eine Positionierungsgerät 4a angebracht, das ein Raumsegment 5 erfasst, in dem sich im allgemeinen Fall einer Winkel- und Entfernungsmessung wenigstens zwei Referenzpunkte 2a' befinden sollen. Erfasst dieses Raumsegment 5 weniger als zwei Referenzpunkte 2a', so kann es erforderlich sein, das erfasste Raumsegment 5 in seiner Grösse oder Ausrichtung zu verändern. Für ein rein auf Entfernungsmessungen basierendes lokales Positionierungssystem müssen jedoch mindestens drei im Raumsegment 5 befindliche Referenzpunkte 2a' erfasst und deren Distanzen zum Positionierungsgerät 4a gemessen werden. Aus den gemessenen Werten wird die Aktualposition abgeleitet.

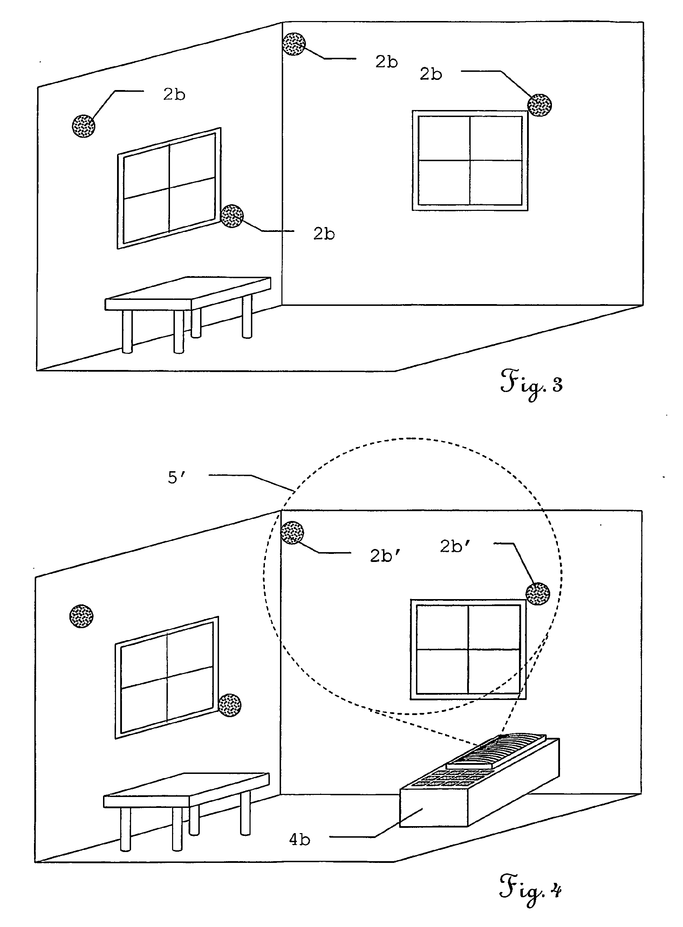

Die Ausgangssituation für einen anderen Einsatzbereich des erfindungsgemässen Verfahrens wird in Fig.3 am Beispiel einer Nutzung in einem Gebäudeinnenraum dargestellt. An den Wänden des Raumes werden vor Beginn eines Vermessungsauftrages Referenzpunkte 2b angebracht und diese in ihrer Position vermessen. Dies kann beispielsweise mit einem handgehaltenen Entfernungsmesser als Messgerät mit Neigungs- und Richtungsmesser erfolgen. Mit diesem Entfernungsmesser werden von einer bekannten Initialposition aus nacheinander die Positionen der Referenzpunkte 2b durch Messung von Neigungswinkel, Richtung und Entfernung abgeleitet.

Fig.4 zeigt die Darstellung die nachfolgenden Schritte des erfindungsgemässen Verfahrens zur Lagebestimmung in einem Innenraum eines Gebäudes. Ein erfindungsgemässes Messgerät 4b erfasst ein Raumsegment 5', in dem mindestens zwei Referenzpunkte 2b' detektiert werden. Die im Raumsegment 5' erfassten und abgetasteten zwei Referenzpunkte 2b' werden hinsichtlich ihrer Distanzen und Neigungswinkel vom Messgerät 4b vermessen. Jedoch sind auch alternative Mengen von Grössen zur Bestimmung der Aktualposition und/oder Aktualorientierung verwendbar, wie z.B. der in Fig.2 dargestellte und rein auf Distanzmessungen beruhende Ansatz, für den aber mindestens drei Referenzpunkte hinsichtlich ihrer Entfernung vermessen werden müssten. Aus den Distanzen und Neigungswinkeln als Ortsinformationen kann unter Berücksichtigung der absoluten Positionen der Referenzpunkte 2b' auf die Aktualposition des Positionierungsgerätes 4b geschlossen werden. Wie auch im folgenden erfolgt die Darstellung rein schematisch, so dass die Grössenverhältnisse der dargestellten Objekte nicht als massstäblich zu betrachten ist.

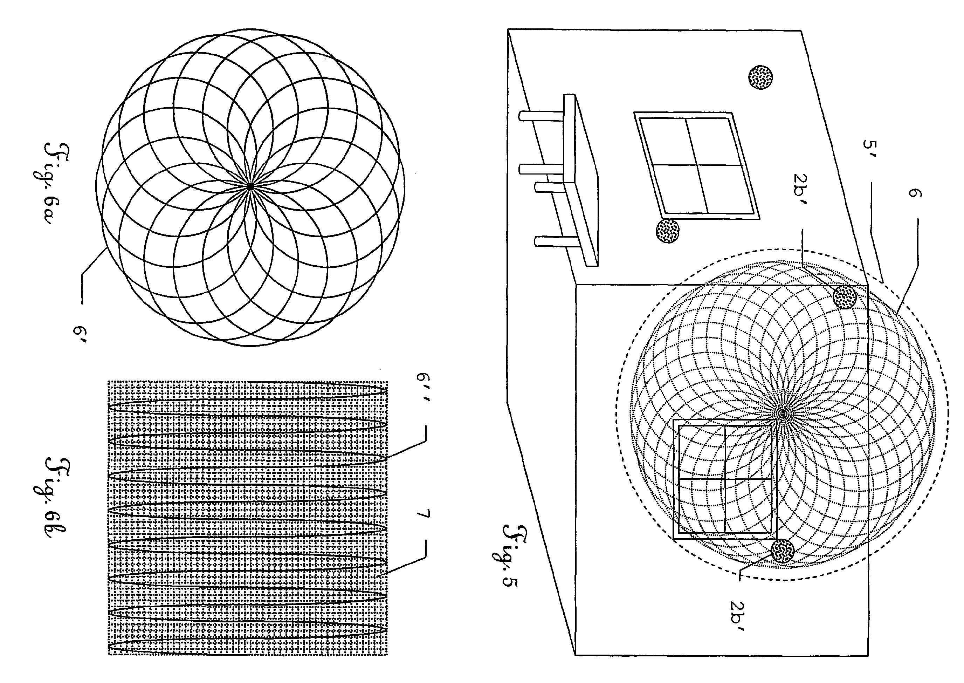

In Fig.5 erfolgt die Darstellung einer beispielhaften Abtastbewegung beim automatischen Detektieren und Ableiten von Ortsinformationen. Das Raumsegment 5' wird mit einem Laserstrahl in einer Abtastbewegung 6 möglichst weitgehend erfasst. Zur Abtastung grösserer Raumsegmente wird dabei im Regelfall eine Bewegung um zwei Achsen erfolgen. In diesem Beispiel wird der Laserstrahl mit einem kegelförmigen Erfassungsbereich in einer rosettenförmigen Abtastbewegung 6 über das Raumsegment 5' mit kreisförmigen Querschnitt geführt, wobei die Stellung der für die Abtastbewegung 6 verwendeten Gerätekomponente erfasst wird. Beim Auftreffen des Laserstrahls auf einen der im Raumsegment 5' enthaltenen Referenzpunkte 2b' wird ein Reflex hoher Intensität erzeugt, der zur Detektion des Referenzpunktes 2b' Verwendung findet, z.B. durch Verwendung eines Filters oder einer schwellwertabhängigen Erfassung von Reflexen. Durch den Laserstrahl erfolgt parallel eine Messung der Entfernung zum Referenzpunkt 2b'. Ist das Durchlaufen der Abtastbewegung 6 schnell gegenüber einer Bewegung des Raumsegments 5' kann aus der zeitlichen Position der empfangenen Reflexe die Lage der Referenzpunkt 2b' zueinander geschlossen werden, da die Parameter der Abtastbewegung 6 und deren zeitlicher Verlauf bekannt sind.

Fig.6a-b zeigt die Darstellung von geeigneten Abtastbewegungen für ein erfindungsgemässes Verfahren. Fig.6a zeigt eine weitere rosettenförmige Abtastbewegung 6' mit geringerem Überdeckungsgrad eines vollständig erfassten kreisförmigen Raumsegments. Allerdings können auch andere Formen der Abtastbewegung 6'' erfindungsgemäss verwendet werden. Beispielsweise kann ein rechteckförmiges Raumsegment, das beispielsweise einer Matrix aus Bildpunkten 7 entspricht, durch eine zick-zackförmige Abtastbewegung 6'' ausgefüllt werden. Ist die Abtastbewegung bekannt, so kann diese auch parametrisiert werden, z.B. mit der Zeit oder einer Stellung der Welle eines gemeinsamen Antriebsmotors, der alle Teilbewegung des Abtastvorgangs gemeinsam antreibt, als Parameter.

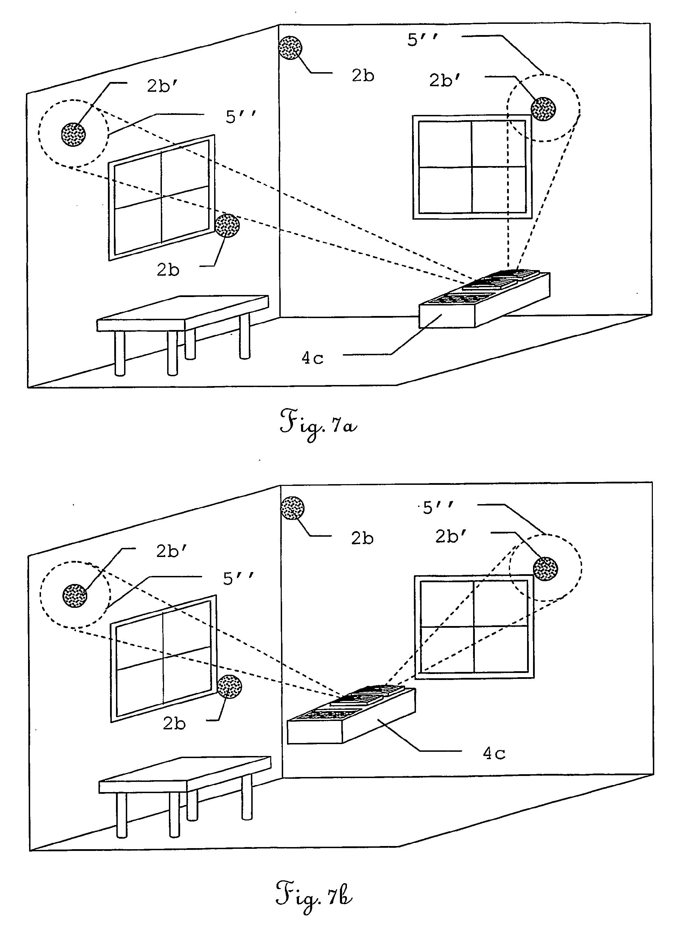

In Fig.7a-b wird eine beispielhafte Verwendung von zwei Raumsegmenten 5'' beim automatischen Detektieren und Ableiten von Ortsinformationen dargestellt.

Das Messgerät 4c in einer zweiten Ausführungsform verfügt über zwei Tracker, die jeweils zur Verfolgung von Referenzpunkten 2b ausgebildet sind. Jeder der beiden Tracker sucht unabhängig vom anderen ein Raumsegment 5'', in dem ein detektierbarer Referenzpunkt 2b' enthalten ist. Nach der Erfassung des Referenzpunktes 2b' wird dieser ständig verfolgt und das Raumsegment 5'' bleibt somit ständig auf den jeweils zugeordneten Referenzpunkt 2b' ausgerichtet. Trotz der in Fig.7a und Fig.7b dargestellten unterschiedlichen Positionen des Messgeräts 4c erfolgt stets die Erfassung der gleichen Referenzpunkte 2b', so dass ein Wechsel und eine erneute Identifizierung von Referenzpunkten nicht notwendig ist.

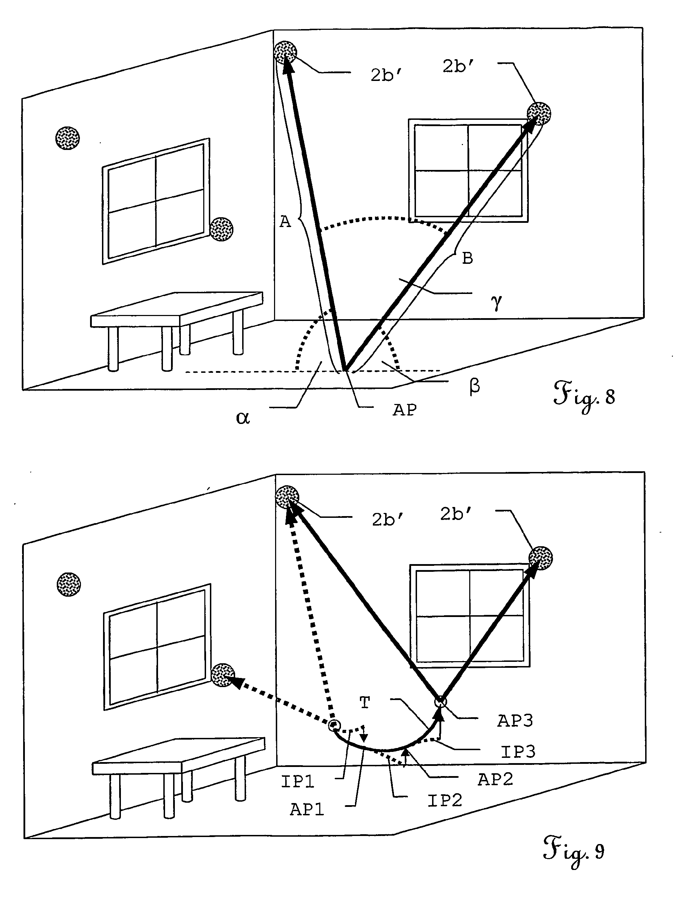

Fig.8 veranschaulicht die mathematischen Bedingungen für eine Möglichkeit zum Ableiten der Aktualposition AP des bewegbaren Messgeräts aus den Ortsinformationen und den Positionen des ersten und zweiten Referenzpunkts 2b'. Vom an der Aktualposition AP befindlichen Positionierungsgerät aus werden die erste Distanz A zusammen mit dem zugehörigen Neigungswinkel $\alpha$ und die zweite Distanz B zusammen mit dem zugehörigen Neigungswinkel $\beta$ zu beiden Referenzpunkten 2b' gemessen. Aus der Kenntnis dieser Grössen kann die Aktualposition AP - bis auf Spiegelung an einer Vertikalebene durch die beiden Referenzpunkte 2b' - eindeutig abgeleitet werden. Alternativ kann auch statt der Messung der zweiten Distanz B der Winkel $\gamma$ zwischen den beiden Referenzpunkten gemessen bzw. aus einem aufgenommenen Bild abgeleitet werden. Auch aus diesen Grössen kann die Aktualposition - ebenfalls bis auf die Spiegelung - eindeutig abgeleitet werden. Sind zudem die Winkel gegenüber einer Geräteachse bekannt, so kann auch die Orientierung des Messgerätes bestimmt werden.

Fig.9 zeigt schematisch die Verwendung eines erfindungsgemässen Verfahrens in Kombination mit einer weiteren Positionierungs- oder Orientierungsmessvorrichtung. Ausgehend von einer ersten Position, von der aus eine Messung zu Referenzpunkten stattgefunden hat, wird das Messgerät entlang einer Trajektorie T bewegt, wobei das Messgerät mit Inertialsensoren als weiterer Positionierungs- oder Orientierungsmessvorrichtung ausgestattet ist, die fortlaufend eine Positions- oder Ausrichtungsbestimmung vornimmt. Aufgrund von Drifteffekten wird hierdurch eine scheinbare Position oder Ausrichtung entlang des ersten Interpolationspfades IP1 angegeben, deren Entwicklung nach einem Zeitintervall wieder durch eine Bestimmung einer ersten Aktualposition AP1 bzw. einer Aktualorientierung mittels des erfindungsgemässen Verfahrens korrigiert wird.

Beim Durchlaufen der Trajektorie werden in Zeitintervallen nacheinander die Entwicklung der scheinbaren Positionen auf dem zweiten Interpolationspfad IP2 und dem dritten Interpolationspfad IP3 durch die mit dem erfindungsgemässen Verfahren gemessene zweite Aktualposition AP2 und dritte Aktualposition AP3 bzw. den Aktualorientierungen korrigiert. Durch die Kombination der beiden Verfahren können entweder zwischen den Messungen des erfindungsgemässen Verfahrens liegende Lagen abgeleitet, nicht mit Referenzpunkten versehene Bereiche überwunden werden oder aber eine Korrektur der auf Inertialsensoren basierten Vorrichtung erfolgen. Darüber hinaus werden durch eine solche Kombination eine Erweiterung des Einsatzbereichs und eine Erleichterung der Handhabung realisiert.

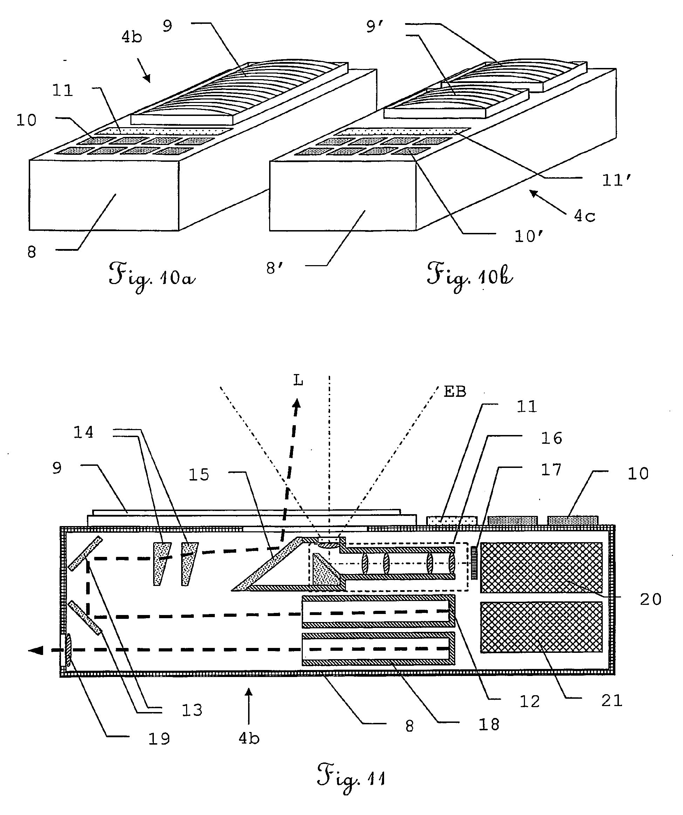

In Fig.10a-b sind zwei mögliche Ausführungsformen des erfindungsgemässen Messgeräts gegenständlich dargestellt.

Das in Fig.10a dargestellte Messgerät 4b als erste Ausführungsform weist ein Gehäuse 8 auf, auf dessen Oberseite Tasten 10 zur Eingabe von Daten und Steuerbefehlen angebracht sind. In einem Anzeigefeld 11 erfolgt die Darstellung von Messergebnissen. Die Emission von Laserstrahlung und die Erfassung des Raumsegments erfolgen durch eine auf dem Messgerät 4b befindliche, strahlungsdurchlässige Haube 9. Durch die Wölbung der Haube 9 können auch seitwärts des Messgeräts 4b liegende Raumwinkelbereiche erfasst werden.

In Fig.10b wird eine zweite Ausführungsform des Messgeräts 4c gezeigt. Neben Gehäuse 8 Tasten 10 zur Eingabe von Daten und Steuerbefehlen und einem Anzeigefeld 11 verfügt das Messgerät 4c über zwei strahlungsdurchlässige Hauben 9' durch die eine Emission von Laserstrahlung und die Erfassung jeweils eines Raumsegments erfolgt. Die Emission und Erfassung werden durch Tracker gesteuert, die eine automatisierte Zielverfolgung von Referenzpunkten ermöglichen.

Fig.11 zeigt die Darstellung von Komponenten der ersten Ausführungsform eines erfindungsgemässen Messgeräts 4b mit einem Gehäuse 8 und den darin integrierten Komponenten. Auf dem Gehäuse 8 befinden sich Tasten 10 und ein Anzeigefeld 11 zur Ein- und Ausgabe von Daten und Steueranweisungen. Von einer ersten Strahlungsquelle 12 wird Laserstrahlung L emittiert, die über Umlenkelemente 13 auf ein rotierbares Prismenpaar 14 als Steuerkomponente geführt wird. Durch das rotierbare Prismenpaar 14 wird der Winkel, unter dem die Laserstrahlung L auf einen Spiegel 15 trifft, periodisch variiert, so dass eine rosettenförmige Abtastbewegung des vom Messgerät 4b durch die Haube 9 emittierten Laserstrahls L resultiert. Dabei kann die Stellung der zur Emission verwendeten Komponenten zur Ableitung der Aktualorientierung fortlaufend erfasst werden. Die von einem Ziel, insbesondere einem Referenzpunkt zurückreflektierte Laserstrahlung wird über den gleichen Strahlgang zur Strahlungsquelle 12 zurückgeführt, in die hier eine Empfänger zur Entfernungsmessung baulich integriert ist.

Die von einem innerhalb des Erfassungsbereichs EB liegenden Referenzpunkt zurückreflektierte Strahlung wird ausserdem über ein als Endoskop 16 ausgebildetes optisches System auf eine Kamera 17 als bildaufnehmender Komponente geführt. Durch diese Kamera 17 wird parallel zur Entfernungsmessung eine Erfassung der Referenzpunkte und deren Identifikation mit Verfahren der Bildverarbeitung ermöglicht. Insbesondere kann hier eine Winkelmessung durch eine Abzählung der zwischen zwei Referenzpunkten liegenden Bildpunkte durchgeführt werden.

Zur Steuerung und Datenverarbeitung verfügt das erfindungsgemässe Messgerät 4b über eine Recheneinheit 20 mit Messkomponente zum automatischen Detektieren detektierbar gestalteter Referenzpunkte und zum Ableiten von Ortsinformationen der Referenzpunkte und einer Lagekomponente zur Ableitung der Aktualposition und Aktualorientierung des Messgeräts 4b aus den Ortsinformationen der Referenzpunkte.

Gegebenenfalls kann das Messgerät auch über Inertialsensoren 21 verfügen.

Um eine gleichzeitige Funktionalität als geodätisches Instrument bereitzustellen, kann das Messgerät 4b über eine zweite, ebenfalls als Entfernungsmesser ausgebildete Strahlungsquelle 18 verfügen, mit der Distanzmessungen zu aufzunehmenden Zielen möglich sind. Durch die Kombination von Messgerät 4b und herkömmlichem Entfernungsmesser kann eine automatische Verknüpfung von Entfernungsinformation und Aktualposition bzw. Aktualorientierung erfolgen und somit der gesamte Vermessungsvorgang vereinfacht und beschleunigt werden.

Es versteht sich, dass diese dargestellten Figuren nur Beispiele möglicher vorrichtungs- und verfahrensseitiger Ausführungsformen darstellen. So können die genutzten Komponenten in Fig.10 auch in anderen Zusammenstellungen und Abfolgen erfindungsgemäss verwendet werden. Darüber hinaus liegt es im Handeln des Fachmanns ergänzende oder alternative optische Komponenten, beispielsweise mit diffraktiver Wirkung, sowie allgemein in der Laserphysik bzw. -technik verwendete Komponenten gleicher oder ähnlicher Wirkung bzw. Funktionalität zu verwenden. In der Fig. 10 werden notwendige elektronische Steuer-, Stellungsmess- und Versorgungsanteile sowie Montagekomponenten lediglich aus Gründen der Anschaulichkeit nicht dargestellt.

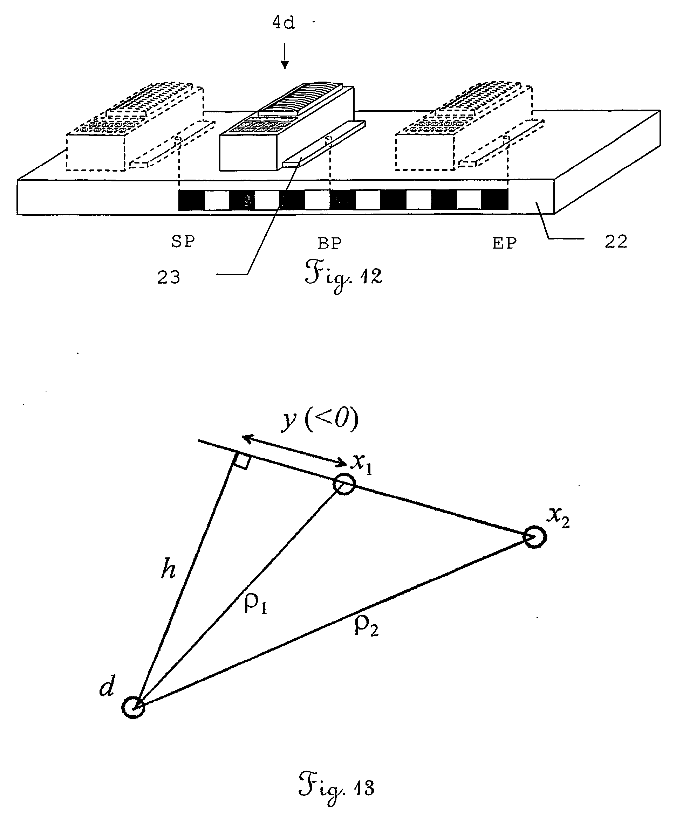

Fig.12 erläutert die erfindungsgemässe Verwendung des erfindungsgemässen Verfahrens zur Festlegung von Bearbeitungspositionen BP. Mit einer dritten Ausführungsform des erfindungsgemässen Messgerätes 4d als Positionierungsgerät werden jeweils eine Startposition SP und eine Endposition EP auf einem zu bearbeitenden Werkstück, das hier exemplarisch durch eine Tischlerplatte 22 dargestellt wird, festgelegt. Beispiele für die Bearbeitung von Werkstücken stellen das Einschlagen von Nägeln in Wände oder das Bohren von Löchern dar. Durch eine seitlich am Messgerät 4d angebrachte Leiste 23 mit einer Markieröffnung können die erreichten Bearbeitungspositionen BP auf der Tischlerplatte 22 markiert werden. Dabei kann ein Auseinanderfallen von Markieröffnung und Bezugspunkt der Positionsbestimmung im Messgerät 4d kalkulatorisch berücksichtigt werden. Die durch Startposition SP und Endposition EP definierte Strecke wird durch eine Rechenkomponente im Messgerät 4d in vorbestimmte Abschnitte unterteilt. Diese Abschnitte können sowohl äquidistant als auch nach einem komplexeren Muster bestimmt werden. Nachfolgend wird das Messgerät 4d über die Tischlerplatte 22 geführt, wobei eine Anzeige jeweils das Erreichen einer der vorbestimmten Bearbeitungspositionen BP signalisiert. Diese kann dann für weitere Bearbeitungsschritte markiert werden. Für eine solche Anwendung kann das Messgerät 4d ähnlich einer Computermaus mit Rollen oder Gleitsegmenten ausgestattet werden.

Fig.13 erläutert grundlegende mathematische Beziehungen zum Ableiten der Lage des bewegbaren Messgeräts im Raum.

Zur Messung der Position bei einer Lagebestimmung sind hinsichtlich der Auswahl von aufzunehmenden Messwerten grundsätzlich drei Minimalvarianten möglich.

1. Messung der Distanzen zu zwei Referenzpunkten und Messung der Elevation eines der Referenzpunkte.

2. Messung von Distanz und Elevation zu einem der zwei Referenzpunkte und Messung des Zwischenwinkels der beiden Referenzpunkte.

In beiden Fällen dürfen die zwei Referenzpunkte nicht vertikal übereinander stehen und in beiden Fällen gibt es im günstigen Fall zwei Lösungen für die Position, nämlich symmetrisch zur Ebene, die die zwei Referenzpunkte enthält und senkrecht auf der Horizontalebene steht.

Diese Uneindeutigkeit lässt sich praktisch auf verschiedene Arten beheben, z.B. durch einen Richtungsmesser, bspw. einen Kompass, wobei an diesen keine hohen Genauigkeitsanforderungen gestellt werden müssen, oder durch Apriori-Wissen über die Aufstellung. So sind z.B. die Referenzpunkte an einer Wand und das Objekt kann nicht durch die Wand hindurchmessen oder beim Aufstart ist bekannt, auf welcher Seite der Symmetrieebene das Objekt steht und es wird dann verfolgt und kann somit auch durch die Symmetrieebene hindurch fahren.

Die Punkte mit konstanter Distanz und Elevation zu einem Referenzpunkt liegen somit auf einem Breitenkreis der Kugel mit dem Referenzpunkt als Zentrum und der Distanz als Radius.

3. Messung der Elevationen beider Referenzpunkte und Messung der Distanz zu einem der Referenzpunkte.

Auch hier dürfen die zwei Referenzpunkte nicht vertikal übereinander stehen und zusätzlich darf der Referenzpunkt, zu dem die Distanz gemessen wird nicht auf der gleichen (vertikalen) Höhe liegen wie das Objekt, da sonst die Elevation des Referenzpunkts, zu dem die Distanz nicht gemessen wurde für alle Punkte des Breitenkreises null ist. Im günstigen Fall gibt es wieder zwei symmetrische Lösungen für die Position.

Um eine für geodätische Anwendungen hinreichende Genauigkeit zu erhalten, kann es vorteilhaft sein, zu beiden Referenzpunkten Distanz und Elevation zu messen. Für diesen Ansatz folgt aufgrund der Redundanz eine höhere Genauigkeit. Eine Messung von Distanz und Elevation zu einem der zwei Referenzpunkte und Messung des Zwischenwinkels der beiden Referenzpunkte besitzt jedoch aufgrund der notwendigen Messung des Zwischenwinkels eine erhöhte Hardwarekomplexität.

Im Folgenden wird erläutert, wie im Minimalfall einer Bestimmung von nur zwei Distanzen $\rho_1$, $\rho_2$ zu zwei Referenzpunkten (Ortsvektoren $x_1$, $x_2$) und der Elevation $\alpha_1$ zum ersten Referenzpunkt eine dreidimensionale Position $d$ ableitbar ist. Als Ausgangspunkt für die Betrachtung des allgemeinen dreidimensionalen Falls einer Positionsbestimmung dient ein Dreieck, aufgespannt durch die Vektoren $d$, $x_1$, $x_2$, wobei Fig.13 die in der Ebene dieses Dreiecks liegende Figur darstellt.

Die Höhe $h > 0$ des Dreiecks und der vorzeichenbehaftete Höhenabschnitt $y$ berechnen sich mit ebener Geometrie gemäss

$$y = \frac{\rho_1^2 - \rho_2^2 + \|x_2 - x_1\|^2}{2\|x_2 - x_1\|^2}, \quad h = \sqrt{\rho_1^2 - y^2} \qquad (1)$$

In Fig.13 ist $y < 0$, in einem Fall, in dem die Höhe innerhalb des Dreiecks liegt, ist $y > 0$.

Alle nach Verwendung der gemessenen Distanzen noch in Frage kommenden Positionen $d$ liegen nun auf dem Kreis in der Ebene senkrecht auf $x_2 - x_1$, mit Zentrum der Höhenfusspunkt und Radius $h$. Um diesen Kreis analytisch einfach zu beschreiben, wird das folgende der Situation angepasste orthonormale Dreibein eingeführt:

$$\bar{e}_1 = \frac{x_2 - x_1}{\|x_2 - x_1\|}, \quad \bar{e}_2 = \frac{e_3 \times \bar{e}_1}{\|e_3 \times \bar{e}_1\|}, \quad \bar{e}_3 = \bar{e}_1 \times \bar{e}_2 \qquad (2)$$

Dabei bezeichnet $\times$ das Vektorprodukt und $e_3$ ist der vertikale Basisvektor des geodätischen Koordinatensystems. Der Vektor $\bar{e}_2$ ist also horizontal. Die noch in Frage kommenden Positionsvektoren $d$ auf dem besagten Kreis lassen sich damit wie folgt beschreiben:

$$d = x_1 + y \cdot \bar{e}_1 + h \cdot (\bar{e}_2 \cos \varphi + \bar{e}_3 \sin \varphi) \tag{3}$$

wobei der Winkel $\varphi$ ein noch unbekannter Parameter ist. Er muss durch die gemessene Elevation $\alpha_1$ bestimmt werden. Es gilt

$$\rho_1 \sin \alpha_1 = e_3^T (x_1 - d) = x_1^3 - d^3 \tag{4}$$

wobei die dritte Komponente der Vektoren mit dem Superscript 3 geschrieben ist. Zusammen mit Gleichung (3) ergibt sich die Bedingung

$$\rho_1 \sin \alpha_1 = -y \cdot \bar{e}_1^3 - h \cdot (\bar{e}_2^3 \cos \varphi + \bar{e}_3^3 \sin \varphi) \tag{5}$$

welche im allgemeinen zwei Lösungen für $\varphi$ zulässt. Die Lösungen von Gleichung (5) können zum Beispiel numerisch bestimmt werden. Werden diese in (3) eingesetzt, so folgen die beiden möglichen Positionen. Gleichung (5) kann auch explizit gelöst werden: Sie hat die Form

$$A \cos \varphi + B \sin \varphi + C = 0 \tag{6}$$

mit

$$A = h \cdot \bar{e}_2^3, \quad B = h \cdot \bar{e}_3^3, \quad C = y \cdot \bar{e}_1^3 + \rho_1 \sin \alpha_1 \tag{7}$$

Wird

$$c = \cos \varphi, \quad s = \sin \varphi \tag{8}$$

gesetzt, so gilt $A \cdot c + B \cdot s + C = 0$, $c^2 + s^2 = 1$.

Die Lösung dieses Gleichungssystems ergibt

$$c \equiv \cos \varphi = \frac{-AC \pm B \sqrt{A^2 + B^2 - C^2}}{A^2 + B^2}, \quad s \equiv \sin \varphi = \frac{-BC \mp A \sqrt{A^2 + B^2 - C^2}}{A^2 + B^2} \tag{9}$$

Einsetzen in $c^2 + s^2 = 1$ zeigt, dass nur entweder die beiden oberen oder die beiden unteren Wahlen der Vorzeichen in (9) zulässig sind, es folgen somit zwei Lösungen.

Somit werden zur expliziten Berechnung des Positionsvektors $d$ also der Reihe nach die Gleichungen (1), (2), (7), (9), und (3) verwendet.

Für die parallele Bestimmung von Ort und Ausrichtung müssen 6 Freiheitsgrade bestimmt werden. In den untenstehenden Gleichungen werden Vektorkomponenten als Superscripts geschrieben, wobei $v_i := \frac{r_i}{\|r_i\|}$ den Richtungsvektor zum i-ten Referenzpunkt darstellt und die von einem Neigungssensor gemessene Projektion von $e_3$ auf die von $\bar{e}_1$ and $\bar{e}_2$ aufgespannte Ebene gemäss

$$\eta^1 := \bar{e}_1^{\ T} e_3, \quad \eta^2 := \bar{e}_2^{\ T} e_3 \qquad \left( (\eta^1)^2 + (\eta^2)^2 \leq 1 \right)$$

bezeichnet wird. Dabei ist $\{e_1, e_2, e_3\}$ ein raumfestes orthonormales Dreibein und $\{\bar{e}_1, \bar{e}_2, \bar{e}_3\}$ ein objektfestes. Es gelten weiterhin folgende Beziehungen:

$$r_i = \rho_i v_i = \rho_i \cdot \sum_{j=1}^{3} \bar{v}_i^{\ j} \bar{e}_j = \rho_i \cdot \sum_{j=1}^{3} \bar{v}_i^{\ j} E e_j$$

$$E = \begin{bmatrix} \bar{e}_1 & \bar{e}_2 & \bar{e}_3 \end{bmatrix} \in \mathbf{R}^{3\times3}, \quad \bar{v}_i = \begin{bmatrix} \bar{v}_i^{\ 1}, \bar{v}_i^{\ 2}, \bar{v}_i^{\ 3} \end{bmatrix}^T \in \mathbf{R}^3$$

Werden mittels Neigungssensor Neigungen gemessen, so können zum Beispiel Position $d \in \mathbf{R}^3$ und Drehlage $E \in SO(3)$ mittels der Gleichungen

$$w := \sum_{j=1}^{3} (\rho_1 \bar{v}_1^{\ j} - \rho_2 \bar{v}_2^{\ j}) e_j =: \sum_{j=1}^{3} w^j e_j \qquad (10)$$

$$E = \frac{P_{e_3}^{\perp}(x_1 - x_2)[w - (x_1^3 - x_2^3)\eta]^T + (e_3 \times (x_1 - x_2))(\eta \times w)^T}{(x_1^1 - x_2^1)^2 + (x_1^2 - x_2^2)^2} + e_3 \eta^T \qquad (11)$$

$$d = \frac{1}{|I|} \sum_{i \in I} \left( x_i - \rho_i \sum_{j=1}^{3} \bar{v}_i^{\ j} E(:, j) \right) \qquad (12)$$

berechnet werden. Dabei ist $I$ die Indexmenge und $|I|$ die Anzahl der für die Messung verwendeten Referenzpunkte.
Anstelle der Gleichung (11) können auch die folgenden Gleichungen Verwendung finden:

$$\bar{e}_1 = \frac{[w^1 - (x_1^3 - x_2^3)\eta^1][(x_1^1 - x_2^1)e_1 + (x_1^2 - x_2^2)e_2] - (\eta^2 w^3 - \eta^3 w^2)[(x_1^2 - x_2^2)e_1 - (x_1^1 - x_2^1)e_2]}{(x_1^1 - x_2^1)^2 + (x_1^2 - x_2^2)^2} + \eta^1 e_3$$

$$\bar{e}_2 = \frac{[w^2 - (x_1^3 - x_2^3)\eta^2][(x_1^1 - x_2^1)e_1 + (x_1^2 - x_2^2)e_2] - (\eta^3 w^1 - \eta^1 w^3)[(x_1^2 - x_2^2)e_1 - (x_1^1 - x_2^1)e_2]}{(x_1^1 - x_2^1)^2 + (x_1^2 - x_2^2)^2} + \eta^2 e_3$$

$$\overline{e}_3 = \frac{[w^3 - (x_1^3 - x_2^3)\eta^3][(x_1^1 - x_2^1)e_1 + (x_1^2 - x_2^2)e_2] - (\eta^1 w^2 - \eta^2 w^1)[(x_1^2 - x_2^2)e_1 - (x_1^1 - x_2^1)e_2]}{(x_1^1 - x_2^1)^2 + (x_1^2 - x_2^2)^2} + \eta^3 e_3$$

Erfolgt eine Bestimmung ohne Nutzung eines Neigungssensors so können die folgenden Gleichungen verwendet werden:

$$w_{ik} = \sum_{j=1}^{3}(\rho_i \overline{v}_i^j - \rho_k \overline{v}_k^j)e_j \quad (1 \le i < k \le |I|)$$

$$E = \frac{1}{\|x_1 - x_2\|^2 \|x_1 - x_3\|^2 - ((x_1 - x_2)^T(x_1 - x_3))^2}\left\{(x_1 - x_2)[\|x_1 - x_3\|^2 w_{12} - ((x_1 - x_2)^T(x_1 - x_3))w_{13}]^T \right.$$
$$\left. + (x_1 - x_3)[\|x_1 - x_2\|^2 w_{13} - ((x_1 - x_2)^T(x_1 - x_3))w_{12}]^T + ((x_1 - x_2)\times(x_1 - x_3))(w_{12}\times w_{13})^T\right\}$$

$$d = \frac{1}{|I|}\sum_{i\in I}\left(x_i - \rho_i \sum_{j=1}^{3}\overline{v}_i^j E(:,j)\right)$$

In den Figuren sind die Verfahrensschritte, Gebäude und verwendeten Instrumente rein schematisch dargestellt. Insbesondere können aus den Darstellungen keine Grössenverhältnisse oder Details der Bildverarbeitung bzw. Vermessung der Referenzpunkte entnommen werden. Die nur exemplarisch als Referenzpunkte dargestellten Punkte stehen stellvertreterid auch für komplexere Strukturen bzw. die einen Punkt detektierbar gestaltenden Elemente.

## Patentansprüche

1.  Verfahren zur Bestimmung einer Lage (AP, AP1, AP2, AP3) eines handhaltbaren Messgeräts (4a,4b,4c,4d) im Raum, mit

    • einer Menge detektierbar gestalteter Referenzpunkte (2a,2a',2b,2b'), wobei die Menge wenigstens zwei Referenzpunkte (2a,2a',2b,2b') aufweist, und
    • dem handhaltbaren Messgerät (4a,4b,4c,4d), welches zum Detektieren und Messen der Referenzpunkte (2a, 2a',2b,2b') mittels Laserstrahlung (L) ausgebildet ist,
    mit den Schritten

    - Ableiten der Positionen der Referenzpunkte (2a,2a',2b,2b'), insbesondere durch Vermessen der Referenzpunkte (2a,2a',2b,2b') von wenigstens einer bekannten Initialposition aus,
    - Automatisches Detektieren und Ableiten von Ortsinformationen bezüglich wenigstens eines ersten und eines zweiten Referenzpunkts (2a',2b') aus der Menge durch das Messgerät (4a,4b,4c,4d), wobei
    o wenigstens ein Raumsegment (5, 5', 5") automatisch in einer Abtastbewegung (6, 6', 6") mit der Laserstrahlung (L) abgetastet wird und der erste und zweite Referenzpunkt (2a',2b') detektiert werden, und
    o die Ortsinformationen für wenigstens den detektierten ersten und zweiten Referenzpunkt (2a',2b') abgeleitet werden durch Messen wenigstens

    • der Entfernung (A) zwischen Messgerät (4a,4b,4c,4d) und erstem Referenzpunkt (2a',2b') und
    • der Entfernung (B) zwischen Messgerät (4a,4b,4c,4d) und zweitem Referenzpunkt und/oder des Winkels ($\gamma$) zwischen erstem und zweitem Referenzpunkt (2a',2b'),
    • sowie

- des Neigungswinkels ($\alpha,\beta$) zum erstem oder zum zweiten Referenzpunkt (2a',2b') oder
- mindestens einer Entfernung zu einem dritten Referenzpunkt (2a',2b'),

- Ableiten einer Aktualposition (AP,AP1,AP2,AP3) des Messgeräts (4a,4b,4c,4d) aus den Ortsinformationen und den Positionen wenigstens des ersten und zweiten Referenzpunkts (2a',2b'),

wobei einzelne oder mehrere der Schritte wiederholt werden können.

**2.** Verfahren nach Anspruch 1,
**dadurch gekennzeichnet, dass**
beim Automatischen Detektieren und Ableiten von Ortsinformationen wenigstens

• eine Neigung des Messgerätes und/oder
• eine Emissionsrichtung der Laserstrahlung mittelbar oder unmittelbar bestimmt und eine Aktualorientierung des Messgerätes abgeleitet wird.

**3.** Verfahren nach Anspruch 2,
**dadurch gekennzeichnet, dass**
die Emissionsrichtung durch Parametrisierung einer definierten Trajektorie bestimmt wird.

**4.** Verfahren nach einem der vorangehenden Ansprüche,
**dadurch gekennzeichnet, dass**
der erste und zweite Referenzpunkt (2a',2b') anhand ihres Reflexionsvermögens der Laserstrahlung (L) detektiert werden, insbesondere durch Verwendung von kooperativen Zielen zur Festlegung der Referenzpunkte (2a,2a',2b, 2b').

**5.** Verfahren nach einem der vorangehenden Ansprüche,
**dadurch gekennzeichnet, dass**
beim automatischen Detektieren die Referenzpunkte (2a',2b') voneinander unterschieden werden, insbesondere durch ein Erkennen von jedem Referenzpunkt (2a,2a',2b,2b') zugeordneten individuellen Codes oder individueller physikalischer Eigenschaften, vorzugsweise aufgrund spektraler Selektierbarkeit.

**6.** Verfahren nach einem der vorangehenden Ansprüche,
**dadurch gekennzeichnet, dass**
beim automatischen Detektieren und Ableiten von Ortsinformationen eine Aufnahme von Bildern erfolgt.

**7.** Verfahren nach Anspruch 6,
**dadurch gekennzeichnet, dass**
der erste und/oder zweite Referenzpunkt (2a',2b') unter Verwendung von Verfahren der Bildverarbeitung detektiert werden.

**8.** Verfahren nach Anspruch 6 oder 7,
**dadurch gekennzeichnet, dass**
die Ortsinformationen für wenigstens den detektierten ersten und zweiten Referenzpunkt (2a',2b') unter Verwendung von Verfahren der Bildverarbeitung abgeleitet werden.

**9.** Verfahren nach einem der vorangehenden Ansprüche,
**dadurch gekennzeichnet, dass**
die Abtastbewegung (6, 6', 6") scannend erfolgt, insbesondere rosettenförmig oder zick-zackförmig.

**10.** Verfahren nach einem der vorangehenden Ansprüche,
**dadurch gekennzeichnet, dass**
beim automatischen Detektieren eine automatische Zielverfolgung wenigstens eines der Referenzpunkte (2a,2a', 2b,2b') erfolgt.

**11.** Verfahren nach einem der vorangehenden Ansprüche,
**dadurch gekennzeichnet, dass**
die Ortsinformationen und/oder die Ausrichtungsinformation für wenigstens den detektierten ersten und zweiten Referenzpunkt (2a',2b') zeitgleich abgeleitet werden.

12. Verfahren nach einem der vorangehenden Ansprüche,
**dadurch gekennzeichnet, dass**
ein zusätzliches Ableiten der Aktualposition (AP,AP1,AP2,AP3) und/oder der Aktualorientierung mittels Inertialsensoren (21) erfolgt, insbesondere zur Interpolation der Aktualposition (AP,AP1,AP2,AP3) und/oder der Aktualorientierung.

13. Verfahren nach einem der vorangehenden Ansprüche,
**dadurch gekennzeichnet, dass**
das Messen der Entfernung nach einem der folgenden Prinzipien erfolgt

   • Phasenmessung,
   • Pulslaufzeitmessung,
   • Pulslaufzeitmessung mit Schwellwertbestimmung,
   • Pulslaufzeitmessung mit HF-Sampling.

14. Verwendung eines Verfahrens nach einem der vorangehenden Ansprüche zur Korrektur von Abweichungen, insbesondere Drifteffekten, einer auf Inertialsensoren (21) basierenden Positionierungs- und/oder Orientierungsmessvorrichtung.

15. Handhaltbares Messgerät (4a,4b,4c,4d) für ein Verfahren nach einem der Ansprüche 1 bis 13, mit

   - wenigstens einer Strahlungsquelle (12) zur Erzeugung von Laserstrahlung (L),
   - wenigstens einer Meßkomponente zum automatischen Detektieren detektierbar gestalteter Referenzpunkte (2a,2a',2b,2b') und zum Ableiten von Ortsinformationen der Referenzpunkte (2a,2a',2b,2b'), mit einem Empfänger für die Laserstrahlung (L), wobei der Empfänger zur Distanzmessung ausgebildet ist und wobei die Meßkomponente ggf. auch zum Ableiten der Positionen der Referenzpunkte (2a,2a',2b,2b') geeignet ist, **gekennzeichnet durch**

   • wenigstens eine Steuerkomponente (14) zur Veränderung der Emissionsrichtung der Laserstrahlung (L), wobei die Steuerkomponente (14) so ausgelegt ist, dass wenigstens ein Raumsegment (5, 5', 5") automatisch mit Laserstrahlung (L) in einer Bewegung um zwei Achsen abtastbar ist, und
   • einer Positionskomponente zur Ableitung der Aktualposition (AP,AP1,AP2,AP3) des Messgeräts (4a,4b, 4c,4d) aus den Ortsinformationen der Referenzpunkte (2a,2a',2b,2b').

16. Handhaltbares Messgerät (4a,4b,4c,4d) nach Anspruch 15,
**dadurch gekennzeichnet, dass**
die Meßkomponente zur Messung von Winkeln ($\alpha,\beta,\gamma$), insbesondere

   • zwischen zwei Referenzpunkten (2a,2a',2b,2b'),
   • zwischen einem Referenzpunkt (2a,2a',2b,2b') und der Horizontalen und/oder
   • zwischen dem Messgerät und der Horizontalen ausgebildet ist.

17. Messgerät (4a,4b,4c,4d) nach Anspruch 15 oder 16,
**dadurch gekennzeichnet, dass**
die Meßkomponente zur Bestimmung der Emissionsrichtung der Laserstrahlung gegenüber einer Achse des Messgerätes ausgebildet ist.

18. Messgerät (4a,4b,4c,4d) nach Anspruch 15, 16 oder 17,
**gekennzeichnet durch**
Inertialsensoren (21).

19. Messgerät (4a,4b,4c,4d) nach einem der Ansprüche 15 bis 18,
**dadurch gekennzeichnet, dass**
die Steuerkomponente (14) als Scanner ausgebildet ist, insbesondere als Scanner mit drehbaren Prismen oder Spiegeln.

**20.** Messgerät (4a,4b,4c,4d) nach einem der Ansprüche 15 bis 19,
**dadurch gekennzeichnet, dass**
die Meßkomponente eine bildaufnehmende Komponente (17) aufweist, insbesondere eine CCD- oder CMOS-Kamera, vorzugsweise als Weitwinkel-Kamera.

**21.** Messgerät (4a,4b,4c,4d) nach einem der Ansprüche 15 bis 20,
**dadurch gekennzeichnet, dass**
die Meßkomponente eine scannend abtastende Detektionskomponente aufweist, insbesondere mit einem als Endoskop (16) ausgebildeten koaxialen optischen System.

**22.** Messgerät (4a,4b,4c,4d) nach einem der Ansprüche 15 bis 21,
**gekennzeichnet durch**
einen weiteren Entfernungsmesser (18).

**23.** Messgerät (4a,4b,4c,4d) nach Anspruch 15 bis 22,
**dadurch gekennzeichnet, dass** die Steuerkomponente (14) so ausgebildet ist, dass das Raumsegment (5, 5', 5") in seiner Ausdehnung veränderbar ist.

**24.** Messgerät (4c) nach Anspruch 15 bis 23,
**dadurch gekennzeichnet, dass**
die Steuerkomponente (14) so ausgebildet ist, dass wenigstens zwei Raumsegmente (5") unabhängig voneinander abtastbar sind, insbesondere durch zwei Tracker zur Zielverfolgung.

**25.** Messgerät (4a,4b,4c,4d) nach einem der Ansprüche 15 bis 24,
**gekennzeichnet durch**
eine Anzeige zur Bestätigung, dass das Messgerät (4a,4b,4c,4d) eine vorbestimmte Position eingenommen hat.

**26.** Messgerät (4a,4b,4c,4d) nach Anspruch 25,
**gekennzeichnet durch**
eine Rechenkomponente zur Ableitung von vorbestimmten Positionen, insbesondere **durch** Festlegung einer Startposition (SP) und einer Endposition (EP) zwischen denen Bearbeitungspositionen (BP) nach einem vorgegebenen Schema **durch** die Rechenkomponente automatisch ableitbar sind.

**27.** Lokales Lagebestimmungssystem mit einem Messgerät (4a,4b,4c,4d) nach der Ansprüche 15 bis 26 und wenigstens zwei Reflektoren zur Festlegung von detektierbar gestalteten Referenzpunkten (2a,2a',2b,2b').

**28.** Lokales Lagebestimmungssystem nach Anspruch 27,
**dadurch gekennzeichnet, dass**
wenigstens einer der Reflektoren als eines der folgenden, Elemente, insbesondere als mit einer Codierung oder einer spektralen Selektierbarkeit versehenes Element, ausgebildet ist

- Glassphären, insbesondere als Voll- oder Halbkugel,
- retroreflektive Folie,
- Tripelprisma.

**29.** Verwendung des Verfahrens nach einem der Ansprüche 1 bis 13 zur Markierung von Bearbeitungspositionen, wobei

- durch das Verfahren eine erste Aktualposition als Startposition und eine zweite Aktualposition als Endposition definiert werden und
- zwischen Startposition und Endposition Bearbeitungspositionen nach einem vorgegebenem Schema automatisch abgeleitet werden, so dass durch das Verfahren das Einnehmen einer Bearbeitungspositionen verifiziert werden kann.

**Claims**

**1.** Method for determining a spatial position (AP, AP1, AP2, AP3) of a hand-held measuring appliance (4a, 4b, 4c, 4d), comprising

EP 1 664 674 B1

• a quantity of reference points (2a, 2a', 2b, 2b') which have been made detectable, the quantity comprising at least two reference points (2a, 2a', 2b, 2b'), and
• the hand-held measuring appliance (4a, 4b, 4c, 4d) which is formed for detecting and measuring the reference points (2a, 2a', 2b, 2b') by means of laser radiation (L),
comprising the steps

- derivation of the positions of the reference points (2a, 2a', 2b, 2b'), in particular by surveying the reference points (2a, 2a', 2b, 2b') from at least one known initial position,
- automatic detection and derivation of location information relative to at least one first and one second reference point (2a', 2b') from the quantity by the measuring appliance (4a, 4b, 4c, 4d),
o at least one spatial segment (5, 5', 5") being automatically scanned in a scanning movement (6, 6', 6") by the laser radiation (L) and the first and second reference points (2a', 2b') being detected, and
o the location information for at least the detected first and second reference points (2a', 2b') being derived by measuring at least

• the distance (A) between measuring appliance (4a, 4b, 4c, 4d) and first reference point (2a', 2b') and
• the distance (B) between measuring appliance (4a, 4b, 4c, 4d) and second reference point and/or the angle (γ) between first and second reference points (2a', 2b'),
■ and

- the angle of inclination (α, β) to the first or to the second reference point (2a', 2b') or
- at least one distance to a third reference point (2a', 2b'),

- derivation of an actual position (AP, AP1, AP2, AP3) of the measuring appliance (4a, 4b, 4c, 4d) from the location information and the positions of at least the first and second reference point (2a', 2b'),

it being possible for individual steps or a plurality of the steps to be repeated.

2. Method according to Claim 1, **characterized in that**, in the automatic detection and derivation of location information, at least

• an inclination of the measuring appliance and/or
• an emission direction of the laser radiation is determined indirectly or directly and an actual orientation of the measuring appliance is derived.

3. Method according to Claim 2, **characterized in that** the emission direction is determined by configuring a defined trajectory.

4. Method according to any of the preceding Claims, **characterized in that** the first and second reference points (2a', 2b') are detected on the basis of their reflectivity of the laser radiation (L), in particular by using cooperative targets for establishing the reference points (2a, 2a', 2b, 2b').

5. Method according to any of the preceding Claims, **characterized in that**, in the automatic detection, the reference points (2a', 2b') are distinguished from one another, in particular by recognition of individual codes or individual physical properties coordinated with each reference point (2a, 2a', 2b, 2b'), preferably on the basis of spectral selectivity.

6. Method according to any of the preceding Claims, **characterized in that**, in the automatic detection and derivation of location information recording of images is effected.

7. Method according to Claim 6, **characterized in that** the first and/or second reference points (2a', 2b') are detected using image processing methods.

8. Method according to Claim 6 or 7, **characterized in that** the location information for at least the detected first and second reference points (2a', 2b') are derived using image processing methods.

9. Method according to any of the preceding Claims, **characterized in that** the scanning movement (6, 6', 6") is effected by scanning, in particular in a rosette-like or zig zag manner.

17

10. Method according to any of the preceding Claims, **characterized in that**, in the automatic detection, automatic target tracking of at least one of the reference points (2a, 2a', 2b, 2b') is effected.

11. Method according to any of the preceding Claims, **characterized in that** the location information and/or the alignment information for at least the detected first and second reference points (2a', 2b') are simultaneously derived.

12. Method according to any of the preceding Claims, **characterized in that** an additional derivation of the actual position (AP, AP1, AP2, AP3) and/or of the actual orientation is effected by means of inertial sensors (21) in particular for the interpolation of the actual position (AP, AP1, AP2, AP3) and/or of the actual orientation.

13. Method according to any of the preceding Claims, **characterized in that** the measurement of the distance is effected according to one of the following principles

    • phase measurement,
    • pulse transit time measurement,
    • pulse transit time measurement with threshold value determination,
    • pulse transit time measurement with HF sampling.

14. Use of a method according to any of the preceding Claims for correcting deviations, in particular drift effects, of a positioning and/or orientation measuring device based on inertial sensors (21).

15. Measuring appliance (4a, 4b, 4c, 4d) for a method according to any of Claims 1 to 13, comprising

    - at least one radiation source (12) for producing laser radiation (L),
    - at least one measuring component for automatic detection of reference points (2a, 2a', 2b, 2b') which have been made detectable and for derivation of location information of the reference points (2a, 2a', 2b, 2b'), comprising a receiver for the laser radiation (L), the receiver being formed for distance measurement and the measuring component optionally also being suitable for deriving the positions of the reference points (2a, 2a', 2b, 2b'),
    **characterized by**

    • at least one control component (14) for changing the emission direction of the laser radiation (L), the control component (14) being designed so that at least one spatial segment (5, 5', 5") can be automatically scanned by laser radiation (L), and
    • a position component for deriving the actual position (AP, AP1, AP2, AP3) of the measuring appliance (4a, 4b, 4c, 4d) from the location information of the reference points (2a, 2a', 2b, 2b').

16. Hand-held measuring appliance (4a, 4b, 4c, 4d) according to Claim 15, **characterized in that** the measuring component is formed for measuring angles ($\alpha$, $\beta$, $\gamma$), in particular

    • between two reference points (2a, 2a', 2b, 2b')
    • between a reference point (2a, 2a', 2b, 2b') and the horizontal
    and/or
    • between the measuring appliance and the horizontal.

17. Measuring appliance (4a, 4b, 4c, 4d) according to Claim 15 or 16, **characterized in that** the measuring component is formed for determining the emission direction of the laser radiation relative to an axis of the measuring appliance.

18. Measuring appliance (4a, 4b, 4c, 4d) according to Claim 15, 16, or 17, **characterized by** inertial sensors (21).

19. Measuring appliance (4a, 4b, 4c, 4d) according to any of Claims 15 to 18, **characterized in that** the control component (14) is in the form of a scanner, in particular in the form of a scanner having rotatable prisms or mirrors.

20. Measuring appliance (4a, 4b, 4c, 4d) according to any of Claims 15 to 19, **characterized in that** the measuring component has an image-recording component (17), in particular a CCD or CMOS camera, preferably in the form of a wide-angled camera.

21. Measuring appliance (4a, 4b, 4c, 4d) according to any of Claims 15 to 20, **characterized in that** the measuring component has a scanning detection component, in particular comprising a coaxial optical system in the form of an endoscope (16).

22. Measuring appliance (4a, 4b, 4c, 4d) according to any of Claims 15 to 21, **characterized by** a further telemeter (18).

23. Measuring appliance (4a, 4b, 4c, 4d) according to Claims 15 to 22, **characterized in that** the control component (14) is formed in such a way that the spatial segment (5, 5', 5") is variable in its extent.

24. Measuring appliance (4c) according to Claims 15 to 23, **characterized in that** the control component (14) is formed in such a way, that at least two spatial segments (5") can be scanned independently of one another, in particular by two trackers for target tracking.

25. Measuring appliance (4a, 4b, 4c, 4d) according to any of Claims 15 to 24, **characterized by** a display for confirming that the measuring appliance (4a, 4b, 4c, 4d) has assumed a predetermined position.

26. Measuring appliance (4a, 4b, 4c, 4d) according to Claim 25, **characterized by** a computing component for deriving predetermined positions, in particular by establishing a start position (SP) and an end position (EP) between which processing positions (BP) can be automatically derived by the computing component according to a specified scheme.

27. Local position-determining system comprising a measuring device (4a, 4b, 4c, 4d) according to Claims 15 to 26 and at least two reflectors for establishing reference points (2a, 2a', 2b, 2b') which have been made detectable.

28. Local position-determining system according to Claim 27, **characterized in that** at least one of the reflectors is in the form of one of the following elements, in particular in the form of an element provided with a coding or a spectral selectability:

   - glass spheres, in particular as full spheres or hemispheres,
   - retroreflective foil,
   - triple prism.

29. Use of the method according to any of Claims 1 to 13 for marking processing positions, where

   - a first actual position as start position and a second actual position as end position are defined by the method and
   - processing positions are automatically derived according to a specified scheme between start position and end position, so that the assumption of a processing position can be verified by the method.

**Revendications**

1. Procédé pour la détermination d'une position (AP, AP1, AP2, AP3) d'un appareil de mesure pouvant être tenu à la main (4a, 4b, 4c, 4d) dans l'espace avec

   • une quantité de points de référence (2a, 2a', 2b, 2b') configurés détectables, la quantité présentant au moins deux points de référence (2a, 2a', 2b, 2b') et
   • l'appareil de mesure pouvant être tenu à la main (4a, 4b, 4c, 4d) qui est configuré pour détecter et mesurer les points de référence (2a, 2a', 2b, 2b') au moyen d'un rayonnement laser (L),
   avec les étapes
   - dérivation des positions des points de référence (2a, 2a', 2b, 2b'), en particulier par mesure des points de référence (2a, 2a', 2b, 2b') à partir d'au moins une position initiale connue,
   - détection et dérivation automatique d'informations de lieu pour ce qui est d'au moins un premier point de référence et d'un second point de référence (2a', 2b') dans la quantité par l'appareil de mesure (4a, 4b, 4c, 4d),
   ○ au moins un segment d'espace (5, 5', 5") étant balayé automatiquement dans un mouvement de balayage (6, 6', 6") avec le rayonnement laser (L) et le premier et le second point de référence (2a', 2b') étant détectés et
   ○ les informations de lieu pour au moins le premier et le second point de référence détecté (2a', 2b') étant dérivés par mesure au moins

      • de la distance (A) entre l'appareil de mesure (4a, 4b, 4c, 4d) et le premier point de référence (2a', 2b') et

• de la distance (B) entre l'appareil de mesure (4a, 4b, 4c, 4d) et le second point de référence (2a', 2b') et/ou de l'angle ($\gamma$) entre le premier et le second point de référence (2a', 2b')
• ainsi que

    - de l'angle d'inclinaison ($\alpha$, $\beta$) par rapport au premier ou au second point de référence (2a', 2b') ou
    - au moins d'une distance par rapport à un troisième point de référence (2a', 2b'),

- dérivation d'une position actuelle (AP, AP1, AP2, AP3) de l'appareil de mesure (4a, 4b, 4c, 4d) à partir des informations de lieu et des positions d'au moins du premier et du second point de référence (2a', 2b'), des étapes individuelles ou plusieurs des étapes pouvant être répétées.

2. Procédé selon la revendication 1,
**caractérisé en ce que** lors de la détection et de la dérivation automatique d'informations de lieu au moins

• une inclinaison de l'appareil de mesure et/ou
• une direction d'émission du rayonnement laser est déterminée de manière directe ou indirecte et une orientation actuelle de l'appareil de mesure est dérivée.

3. Procédé selon la revendication 2,
**caractérisé en ce que** la direction d'émission est déterminée par la paramétrisation d'une trajectoire définie.

4. Procédé selon l'une des revendications précédentes,
**caractérisé en ce que** le premier et le second point de référence (2a', 2b') sont détectés à l'aide de leur capacité de réflexion du rayonnement laser (L), en particulier par l'utilisation de cibles coopératives pour fixer les points de référence (2a, 2a', 2b, 2b').

5. Procédé selon l'une des revendications précédentes,
**caractérisé en ce que**, lors de la détection automatique, les points de référence (2a', 2b') sont distingués l'un de l'autre, en particulier par une reconnaissance de codes individuels associés à chaque point de référence (2a, 2a', 2b, 2b') ou de propriétés physiques individuelles, de préférence en raison d'une capacité de sélection spectrale.

6. Procédé selon l'une des revendications précédentes,
**caractérisé en ce que**, lors de la détection et de la dérivation automatique d'informations de lieu, une prise d'images est effectuée.

7. Procédé selon la revendication 6,
**caractérisé en ce que** le premier et/ou le second point de référence (2a', 2b') sont détectés en utilisant des procédés de traitement d'images.

8. Procédé selon la revendication 6 ou 7,
**caractérisé en ce que** les informations de lieu pour au moins le premier et le second point de référence détectés (2a', 2b') sont dérivés en utilisant des procédés de traitement d'images.

9. Procédé selon l'une des revendications précédentes,
**caractérisé en ce que** le mouvement de balayage (6, 6', 6") se fait en scannant, en particulier en forme de rosette ou de zigzag.

10. Procédé selon l'une des revendications précédentes,
**caractérisé en ce que**, lors de la détection automatique, une poursuite automatique de cible d'au moins l'un des points de référence (2a, 2a', 2b, 2b') est effectuée.

11. Procédé selon l'une des revendications précédentes,
**caractérisé en ce que** les informations de lieu et/ou l'information d'alignement pour au moins le premier et le second point de référence détecté (2a', 2b') sont dérivées en même temps.

12. Procédé selon l'une des revendications précédentes,
**caractérisé en ce qu'**une dérivation supplémentaire de la position actuelle (AP, AP1, AP2, AP3) et/ou de l'orientation actuelle est effectuée par des capteurs inertiels (21), en particulier pour interpolation de la position actuelle (AP, AP1, AP2, AP3) et/ou de l'orientation actuelle.

13. Procédé selon l'une des revendications précédentes,
    **caractérisé en ce que** la mesure de la distance se fait selon l'un des principes suivants :

    • mesure de phases,
    • mesure du temps de propagation des impulsions,
    • mesure du temps de propagation des impulsions avec détermination du seuil,
    • mesure du temps de propagation des impulsions avec échantillonnage HF.

14. Utilisation d'un procédé selon l'une des revendications précédentes pour la correction d'écarts, en particulier d'effets de dérive, d'un dispositif de mesure de de positionnement et/ou d'orientation basé sur des capteurs inertiels (21).

15. Appareil de mesure pouvant être tenu à la main (4a, 4b, 4c, 4d) pour un procédé selon l'une des revendications 1 à 13 avec

    - au moins une source de rayonnement (12) pour produire un rayonnement laser (L),
    - au moins une composante de mesure pour la détection automatique de points de référence configurés détectables (2a, 2a', 2b, 2b') et pour la dérivation d'informations de lieu des points de référence (2a, 2a', 2b, 2b') avec un récepteur pour le rayonnement laser (L), le récepteur étant configuré pour la mesure de la distance et la composante de mesure étant appropriée, le cas échéant, pour la dérivation des positions des points de référence (2a, 2a', 2b, 2b'),
    **caractérisé par**

    • au moins une composante de commande (14) pour modifier la direction d'émission du rayonnement laser (L), la composante de commande (14) étant conçue de telle manière qu'au moins un segment d'espace (5, 5', 5'') peut être automatiquement balayé par le rayonnement laser et
    • une composante de position pour la dérivation de la position actuelle (AP, AP1, AP2, AP3) de l'appareil de mesure (4a, 4b, 4c, 4d) à partir des informations de lieu des points de référence (2a, 2a', 2b, 2b').

16. Appareil de mesure pouvant être tenu à la main (4a, 4b, 4c, 4d) selon la revendication 15,
    **caractérisé en ce que** la composante de mesure est configurée pour la mesure d'angles ($\alpha$, $\beta$, $\gamma$), en particulier

    • entre deux points de référence (2a, 2a', 2b, 2b'),
    • entre un point de référence (2a, 2a', 2b, 2b') et l'horizontale et/ou
    • entre l'appareil de mesure et l'horizontale.

17. Appareil de mesure (4a, 4b, 4c, 4d) selon la revendication 15 ou 16, **caractérisé en ce que** la composante de mesure est configurée pour déterminer la direction d'émission du rayonnement laser par rapport à un axe de l'appareil de mesure.

18. Appareil de mesure (4a, 4b, 4c, 4d) selon la revendication 15, 16 ou 17, **caractérisé par** des capteurs inertiels (21).

19. Appareil de mesure (4a, 4b, 4c, 4d) selon l'une des revendications 15 à 18, **caractérisé en ce que** la composante de commande (14) est configurée comme un scanner, en particulier comme un scanner avec des prismes ou des miroirs rotatifs.

20. Appareil de mesure (4a, 4b, 4c, 4d) selon l'une des revendications 15 à 19, **caractérisé en ce que** la composante de mesure présente une composante de prise d'images (17), en particulier une caméra CDD ou CMOS, de préférence comme caméra grand angle.

21. Appareil de mesure (4a, 4b, 4c, 4d) selon l'une des revendications 15 à 20, **caractérisé en ce que** la composante de mesure présente une composante de détection qui scanne, en particulier avec un système optique coaxial configuré comme un endoscope (16).

22. Appareil de mesure (4a, 4b, 4c, 4d) selon l'une des revendications 15 à 21, **caractérisé par** un mesureur de distance supplémentaire (18).

**23.** Appareil de mesure (4a, 4b, 4c, 4d) selon les revendications 15 à 22, **caractérisé en ce que** la composante de commande (14) est configurée telle que l'extension du segment d'espace (5, 5', 5") peut être variée.

**24.** Appareil de mesure (4c) selon les revendications 15 à 23,
**caractérisé en ce que** la composante de commande (14) est configurée telle qu'au moins deux segments d'espace (5") peuvent être balayés indépendamment l'un de l'autre, en particulier par deux suiveurs pour la poursuite de cibles.

**25.** Appareil de mesure (4a, 4b, 4c, 4d) selon l'une des revendications 15 à 24,
**caractérisé par** un affichage de confirmation que l'appareil de mesure (4a, 4b, 4c, 4d) a pris une position prédéfinie.

**26.** Appareil de mesure (4a, 4b, 4c, 4d) selon la revendication 25,
**caractérisé par** une composante de calcul pour la dérivation de positions prédéfinies, en particulier par fixation d'une position de départ (SP) et d'une position terminale (EP) entre lesquelles des positions de traitement (BP) peuvent être dérivées automatiquement par la composante de calcul selon un schéma prédéfini.

**27.** Système de détermination de position locale avec un appareil de mesure (4a, 4b, 4c, 4d) selon les revendications 15 à 26 et avec au moins deux réflecteurs pour fixer des points de référence configurés détectables (2a, 2a', 2b, 2b').

**28.** Système de détermination de position locale selon la revendication 27,
**caractérisé en ce qu'**au moins l'un des réflecteurs est configuré comme l'un des éléments suivants, en particulier comme un élément pourvu d'un codage ou d'une capacité de sélection spectrale

- sphères de verre, en particulier comme sphères pleines ou hémisphères,
- feuille rétroréfléchissante,
- triple prisme.

**29.** Utilisation du procédé selon l'une des revendications 1 à 13 pour le marquage de positions de traitement

- une première position actuelle étant définie par le procédé comme position de départ et une seconde position actuelle étant définie comme position terminale et
- des positions de traitement étant dérivées automatiquement entre la position de départ et la position terminale selon un schéma prédéterminé si bien que la prise d'une position de traitement peut être vérifiée par le procédé.

2a

2a

1

2a

Fig. 1

5

2a'

4a

3

Fig. 2

Fig. 3

Fig. 4

6

5′

2b′

2b′

*Fig.* 5

6′′    7

6′

*Fig. 6a*    *Fig. 6b*

*Fig. 7a*

*Fig. 7b*

Fig. 8

Fig. 9

Fig. 10a

Fig. 10b

Fig. 11

4d

SP BP EP 22

23 $\mathcal{F}ig.\ 12$

$y\ (<0)$

$x_1$

$x_2$

$h$

$\rho_1$

$\rho_2$

$d$

$\mathcal{F}ig.\ 13$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5467273 A
- EP 0738899 B1
- WO 2004074773 A
- DE 19533426 A1
- EP 1127287 B1
- WO 9926754 A
- EP 02026648 A
- EP 02026650 A